# EUROPEAN PATENT APPLICATION

(11) **EP 3 383 093 A1**
(43) Date of publication of application: **03.10.2018**
(21) Application number: 16878847.9
(22) Date of filing: 22.12.2016
(51) Int. Cl.: H04W 28/04, H04W 28/06

(54) **USER TERMINAL, WIRELESS BASE STATION, AND WIRELESS COMMUNICATION METHOD**

(30) Priority: 25.12.2015 JP 2015255031
(71) Applicant: NTT DOCOMO, INC., Chiyoda-ku Tokyo 100-6150 (JP)
(72) Inventor: TAKEDA, Kazuki, Tokyo 100-6150 (JP); NAGATA, Satoshi, Tokyo 100-6150 (JP)
(74) Representative: Hoffmann Eitle
(86) International application number: PCT/JP2016/088274
(87) International publication number: WO 2017/110960

(57) **Abstract**

The present invention is designed so that it is possible to achieve both improved spectral efficiency and reduced delay in communication. A user terminal according to one aspect of the present invention has a receiving section that receives downlink control information for scheduling receipt of downlink data, a control section that controls an allocation period for receiving the downlink control information, a data period for receiving at least part of the downlink data based on the received downlink control information, and a delivery acknowledgment period for transmitting delivery acknowledgment information in response to the receipt of the downlink data, in units of transmission time intervals (TTIs), and a transmitting section that transmits the delivery acknowledgment information in a predetermined TTI, and the control section judges the number and/or quantity of the downlink data corresponding to the delivery acknowledgment information transmitted in the predetermined TTI based on predetermined information.

## Description

### Technical Field

The present invention relates to a user terminal, a radio base station and a radio communication method in next-generation mobile communication systems.

### Background Art

In the UMTS (Universal Mobile Telecommunications System) network, the specifications of long term evolution (LTE) have been drafted for the purpose of further increasing high speed data rates, providing lower delays and so on (see non-patent literature 1). In addition, successor systems of LTE (referred to as, for example, "LTE-A" (LTE-Advanced), "FRA" (Future Radio Access), "5G" (5th generation mobile communication system) and so on) are also under study for the purpose of achieving further broadbandization and increased speed beyond LTE.

Existing LTE systems use control based on TDD (Time Division Duplex) and FDD (Frequency Division Duplex). For example, in TDD, whether to use each subframe in the uplink (UL) or in the downlink (DL) is strictly determined based on the UL/DL configuration.

### Citation List

### Non-Patent Literature

Non-Patent Literature 1: 3GPP TS 36.300 "Evolved Universal Terrestrial Radio Access (E-UTRA) and Evolved Universal Terrestrial Radio Access Network (E-UTRAN); Overall Description; Stage 2"

### Summary of Invention

### Technical Problem

However, in existing TDD-based LTE (TD-LTE), it is necessary to perform timing control based on UL/DL configurations, and therefore the scalability and flexibility of data transmission/reception scheduling are limited. For example, in HARQ (Hybrid Automatic Repeat reQuest)-based retransmission control, which is used in existing LTE systems, delivery acknowledgment information is transmitted from the receiving side only after a predetermined period (for example, four subframes later). With such timing control, it is not possible to achieve the low delay that will be required in future radio communication systems.

Also, although, as a simple method of reducing the delay, a configuration to make the predetermined period before delivery acknowledgment information is transmitted short may be possible, in this case, the frequency of transmitting delivery acknowledgment information becomes relatively high, and, consequently, the radio resources available for use for data transmission decrease. It is expected that the spectral efficiency will be deteriorated by this.

The present invention has been made in view of the above points, and it is therefore an object of the present invention to provide a user terminal, a radio base station, and a radio communication method that can achieve both improved spectral efficiency and reduced delay in communication.

### Solution to Problem

A user terminal according to one aspect of the present invention has a receiving section that receives downlink control information for scheduling receipt of downlink data, a control section that controls an allocation period for receiving the downlink control information, a data period for receiving at least part of the downlink data based on the received downlink control information, and a delivery acknowledgment period for transmitting delivery acknowledgment information in response to the receipt of the downlink data, in units of transmission time intervals (TTIs), and a transmitting section that transmits the delivery acknowledgment information in a predetermined TTI, and the control section judges the number and/or quantity of the downlink data corresponding to the delivery acknowledgment information transmitted in the predetermined TTI based on predetermined information.

### Advantageous Effects of Invention

According to the present invention, it is possible to achieve both improved spectral efficiency and reduced delay in communication.

### Brief Description of Drawings

FIG. 1 is a diagram to show an example of data scheduling in existing LTE systems;
FIG. 2A is a diagram to show an example of HARQ-ACK transmission timing corresponding to DL grant-based DL scheduling in existing LTE systems, and FIG. 2B is a diagram to show an example of HARQ-ACK transmission timings in accordance with UL grant-based UL scheduling;
FIG. 3A is a diagram to show a schematic diagram of radio resource arrangement in a self-contained subframe, FIG. 3B is a diagram to show an example of radio resource arrangement in a self-contained subframe for DL data (for DL data transmission), and FIG. 3C is a diagram to show an example of radio resource arrangement in a self-contained subframe for UL data (for UL data transmission);
FIGs. 4A and 4B are diagrams to show an example of performing multi-user scheduling in a self-contained subframe for DL data and a self-contained subframe for UL data, respectively, and FIGs. 4C and 4D are diagrams to show an example in which CDMA is applied to the A/Ns of FIG. 4A and FIG. 4B;
FIG. 5A is a diagram to show an example in which self-contained subframes for UL data, such as the one shown in FIG. 3C, continue temporally, and FIG. 5B is a diagram to show an example configuration of a self-contained subframe for UL data, different from FIG. 5A;
FIGs. 6A and 6B are diagrams to show examples of self-contained subframes for DL data, and FIG. 6C is a diagram to show an example of a frame configuration of TDD UL/DL configuration #5 in existing TD-LTE;
FIG. 7 is a diagram to show an example of HARQ feedback control according to a first embodiment;
FIGs. 8A and 8B provide diagrams to show examples of HARQ feedback control according to a second embodiment;
FIGs. 9A and 9B provide diagrams to show examples of HARQ feedback control according to a third embodiment;
FIG. 10 is a diagram to show an example of variation 1 corresponding to FIG. 7;
FIGs. 11A and 11B are diagrams to show examples of variation 1 corresponding to FIGs. 8;
FIGs. 12A and 12B are diagrams to show examples of variation 1 corresponding to FIGs. 9;
FIGs. 13A and 13B are diagrams to show examples of variation 2 corresponding to FIGs. 8;
FIGs. 14A and 14B are diagrams to show examples of variation 2 corresponding to FIGs. 9;
FIG. 15 is a diagram to show an example of variation 2 when the measure of feedback is 1, 2, 4, and 8;
FIG. 16 is a diagram to show an example of a schematic structure of a radio communication system according to an embodiment of the present invention;
FIG. 17 is a diagram to show an example of an overall structure of a radio base station according to an embodiment of the present invention;
FIG. 18 is a diagram to show an example of a functional structure of a radio base station according to one embodiment of the present invention;
FIG. 19 is a diagram to show an example of an overall structure of a user terminal according to an embodiment of the present invention;
FIG. 20 is a diagram to show an example of a functional structure of a user terminal according to an embodiment of the present invention; and
FIG. 21 is a diagram to show an example hardware structure of a radio base station and a user terminal according to an embodiment of the present invention.

### Description of Embodiments

In existing LTE systems (Rel. 8 to 12), a radio base station (eNB: evolved Node B) schedules data transmission/reception for a user terminal (UE: User Equipment) by using a downlink control channel. To be more specific, DL scheduling and UL scheduling based on downlink control information (DCI) reported in the PDCCH (Physical Downlink Control Channel)/EPDCCH (Enhanced PDCCH) are stipulated.

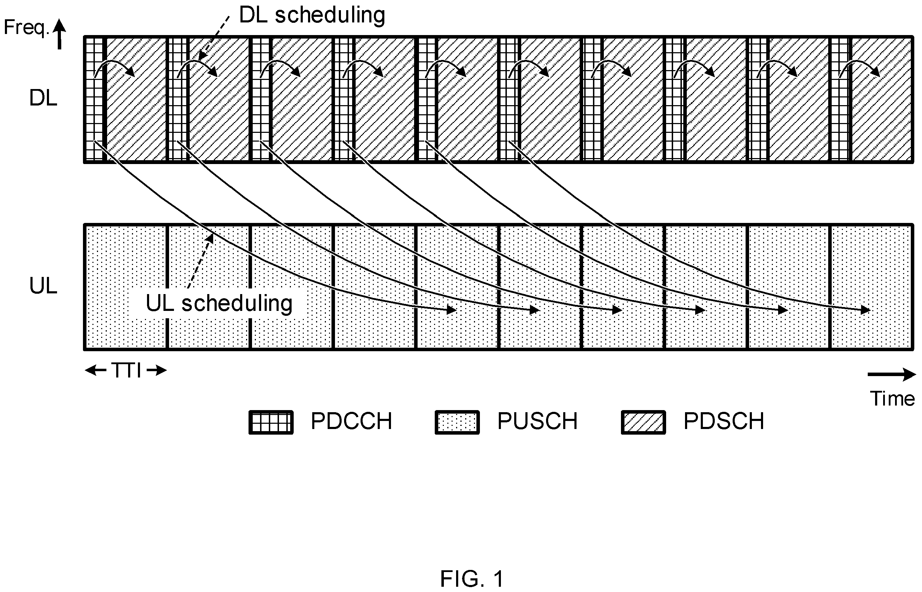

FIG. 1 is a diagram to show an example of data scheduling in existing LTE systems. In FIG. 1, DL scheduling and UL scheduling commanded by DCI received in the PDCCH are shown. As shown in FIG. 1, when a DL grant (also referred to as a "DL assignment" (downlink assignment)) according to, for example, DCI format 1A is detected in a subframe, the UE receives a PDSCH (Physical Downlink Shared Channel), based on this DL grant, in the same subframe.

Further, when a UL grant according to DCI format 0/4 is detected in a subframe, the UE transmits a PUSCH (Physical Uplink Shared Channel), based on this UL grant, in a subframe that comes a predetermined period later (for example, four subframes later).

Note that the downlink control information for scheduling the transmission of uplink data is referred to as "UL grant" (also referred to as "uplink scheduling information," "uplink scheduling control information," etc.) and the downlink control information for scheduling the reception of downlink data (also referred to as "downlink scheduling information," "downlink scheduling control information," etc.) is referred to as "DL grant," but these designations are not by no means limiting. Furthermore, downlink control information (downlink control signals) may be referred to as, for example, "L1/L2 (Layer 1/Layer 2) control information" (L1/L2 control signal), or may be simply referred to as "L1 control information" (L1 control signal).

Furthermore, a subframe may be referred to as a "transmission time interval" (TTI). A TTI (subframe) according to LTE Rel. 8 to 12 is one ms long, and comprised of two time slots. A TTI is a channel-coded data packet (transport block) transmission time unit, and is the processing unit in scheduling, link adaptation, etc.

Although FIG. 1 shows an example of reporting UL/DL grants in the PDCCH, the correspondence between scheduling TTIs and scheduled TTIs is the same as in FIG. 1 also in the case of the EPDCCH. Also, DL grants and the PDSCH need not be transmitted and received in the same carrier (component carrier (CC), cell, etc.), and can be transmitted and received in different carriers. Furthermore, UL grants and the PUSCH need not be transmitted and received in the same carrier, and can be transmitted and received in different carriers.

Further, HARQ (Hybrid Automatic Repeat reQuest)-based retransmission control is used in existing LTE systems. In HARQ, the transmitting side can decide whether to retransmit data or to transmit new data based on delivery acknowledgment information that is fed back from the receiving side (also referred to as, for example, "retransmission control information," "HARQ-ACKs," "ACKs/NACKs" (A/Ns: Acknowledgments/Negative-Acknowledgments), etc.). Note that the delivery acknowledgment information may be reported by way of not sending ACKs/NACKs (discontinuous transmission (DTX)). That is, if the recipient cannot detect an ACK/NACK from the sender (UE or eNB), the recipient (eNB or UE) can interpret that the delivery acknowledgment information in response to the corresponding data is a NACK.

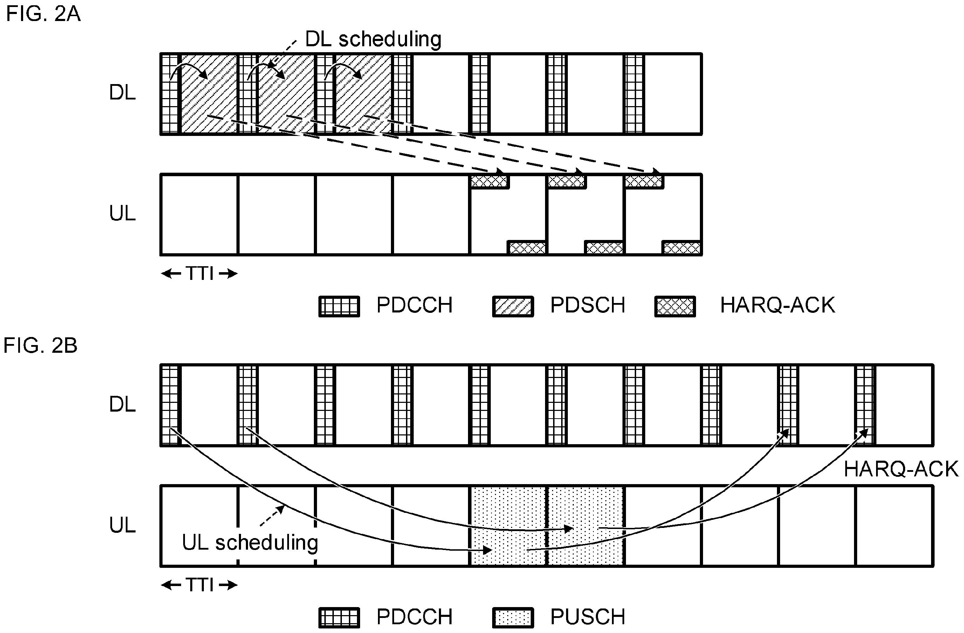

In existing LTE systems, the timings at which the UE transmits/receives HARQ-ACKs in response to data are stipulated. FIGs. 2 provide diagrams to show examples of HARQ-ACK timings in existing LTE systems. FIG. 2A shows the HARQ-ACK transmission timing corresponding to the DL grant-based DL scheduling. The UE transmits an HARQ-ACK in principle four subframes or more after receiving a PDSCH. As shown in FIG. 2A, HARQ-ACKs may support frequency hopping.

FIG. 2B shows HARQ-ACK transmission timings in accordance with UL grant-based UL scheduling. The UE receives an HARQ-ACK in principle four subframes or more after transmitting a PUSCH.

In addition, existing LTE systems use control based on TDD (Time Division Duplex) and FDD (Frequency Division Duplex). To be more specific, it is strictly stipulated whether to use the time/frequency resources for the DL or for the UL per predetermined unit (here, for example, the time resources are subframes, and the frequency resources are CCs).

TDD in existing LTE systems is stipulated so that the eNB and the UE perform timing control as described above based on UL/DL configurations. However, in TDD, timing control based on UL/DL configurations must always be taken into consideration, which restricts the scalability and flexibility of TDD-based LTE (TD-LTE).

Therefore, in the radio communication systems of LTE-Rel. 13 or later versions (for example, 5G), introduction of self-contained subframes is being studied to realize TDD without such restriction. Self-contained subframes are subframes that include all of allocation control channels, data channels, HARQ feedback channel and so on, unlike existing subframes.

In addition, self-contained subframes may be more generalized, and an allocation control channel, the data channel to be allocated (scheduled) by the allocation control channel, and the HARQ feedback channel corresponding to this data channel are all included in consecutive symbols or subframes. To be more specific, self-contained subframe may be interpreted, without losing generality, as being configured so that, when an allocation control channel, the data channel to be allocated (scheduled) by the allocation control channel, and the HARQ feedback channel corresponding to this data channel are in respective time periods, another data channel, the control channel to which the other data channel is allocated and the HARQ feedback channel corresponding to the other data channel are not temporally inserted in these periods.

Self-contained subframes may be referred to as "SC subframes," "self-contained TTIs (SC-TTIs)," "self- contained symbol sets" or the like, or other names may be used. Also, TDD that uses self-contained subframes may be referred to as "self-contained TDD," or other designations may be used.

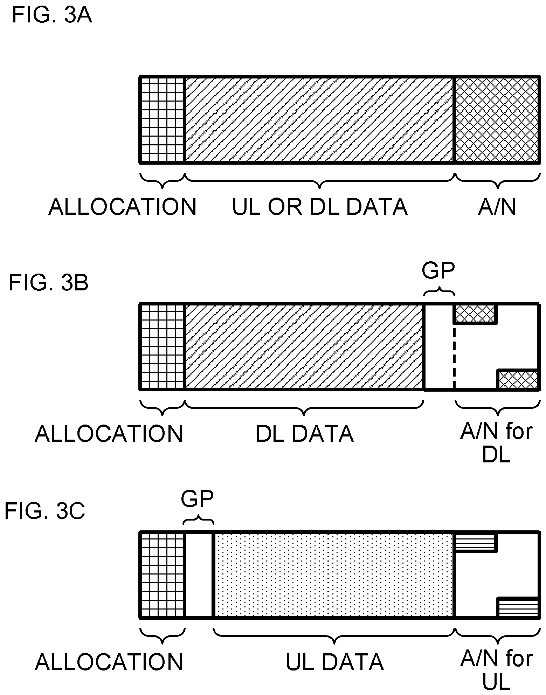

FIGs. 3 provide diagram to show examples of the structures of self-contained subframes. FIG. 3A is a schematic diagram of radio resource arrangement in a self-contained subframe. One self-contained subframe includes an allocation period for arranging a downlink control signal (which may be referred to as a "downlink control signal period," a "scheduling period," a "downlink control channel field," or the like), a data period for placing data (which may be referred to as a "data field" or the like), and an A/N period for arranging an HARQ-ACK (which may also be referred to as a "delivery acknowledgment period," a "delivery acknowledgment information period," an "HARQ period," an "uplink control channel period," a "feedback channel field," etc.).

Note that, the length of each period (duration) may assume any combination. For example, even when the length of at least one period (for example, the length of the allocation period) is set to 0, the subframe may be still referred to as a "self-contained subframe." Also, a subframe that is comprised of at least one period (for example, data period) may be referred to as a "self-contained subframe."

FIG. 3B shows an example of radio resource arrangement in a self-contained subframe for DL data (for DL data transmission). When a self-contained subframe for DL data is used, the UE, using a downlink control channel (for example, the PDCCH), receives a DL grant, which includes allocation information, in the allocation period, receives data in the data period based on the DL grant, and transmits an A/N in response to the reception of the data in the A/N period.

FIG. 3C shows an example of radio resource arrangement in a self-contained subframe for UL data (for UL data transmission). When a self-contained subframe for UL data is used, the UE receives a UL grant in the allocation period, transmits data based on the UL grant in the data period, and, in the A/N period, receives an A/N transmitted in response to reception of the data from the eNB.

A self-contained subframe can be configured to provide a non-transmission period (which may be referred to as, for example, a "guard period" (GP), "gap," "switching gap," "GP period," etc.). By providing a guard period, it is possible to switch between UL/DL within a TTI. GP is introduced assuming that the UE employs timing advance (TA). Note that, a value larger than 0 may be configured as the minimum value in TA. Also, after TA is applied, a GP of a predetermined length may also be configured between a transmitting period and a receiving period of the UE.

FIG. 3B shows an example in which a guard period is provided between the data period and the A/N period in a self-contained subframe for DL data. Also, FIG. 3C shows an example in which a guard period is provided between the allocation period and the data period in a self-contained subframe for UL data. Note that, a self-contained subframe may be configured so that a GP may be provided between other periods. When adopting a configuration in which multiple GPs are provided in a self-contained subframe, the length of each GP may be the same or different.

A GP may be one or more symbol periods. Here, the symbol periods may be expressed, for example, in OFDM (Orthogonal Frequency Division Multiplexing) symbol units, or may be expressed in units of the reciprocal of a predetermined bandwidth (that is, the sampling length), or expressed in other units.

In the A/N period in self-contained subframes for DL data, uplink control information (UCI) (for example, CQI (Channel Quality Indicator), RI (Rank Indicator), etc.) other than A/Ns may be transmitted in addition to A/Ns in response to downlink data.

In the A/N period in a self-contained subframe for UL data, not only A/Ns in response to uplink data, but also the UL grant for the next TTI (the following TTI), a measurement signal (for example, the cell-specific reference signal (CRS), the channel state information reference signal (CSI-RS), etc.) may be transmitted. In this A/N period, the UE may try blind detection of UL grants, or may measure predetermined reference signals (RSs) that are preliminarily configured by higher layer signaling.

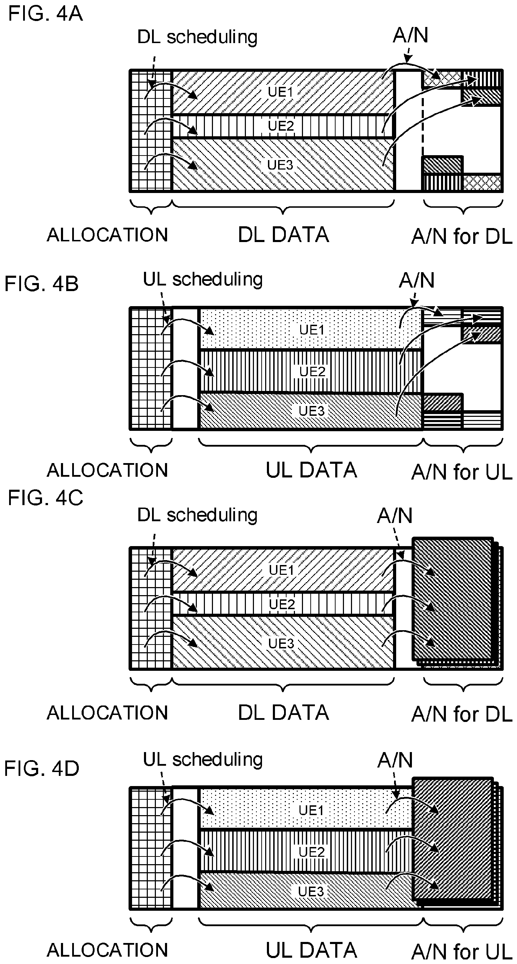

The structures of self-contained subframes are not limited to the examples of FIGs. 3. For example, even in self-contained subframes, multi-user scheduling in the frequency domain may be supported like subframes of existing LTE systems. In addition, in self-contained subframes, like existing LTE systems, A/Ns may be aggregated in a specific radio resource (for example, in a time and/or frequency resource) and transmitted, or may be spread over a wider range of radio resources and transmitted. A/Ns may be spread by using, for example, spread spectrum, the code division multiple access (CDMA) scheme and so on. These configurations will be described with reference to FIGs. 4.

FIGs. 4 provide diagram to show other examples of the configuration of self-contained subframes. FIGs. 4A and 4B show examples of performing multiuser scheduling in a self-contained subframe for DL data and a self-contained subframe for UL data, respectively. In these figures, scheduling information of three users (UE 1 to UE 3) is reported in the allocation period, data of each UE is assigned to different frequency regions in the data period, and an A/N in response to each data is transmitted in the A/N period.

Further, FIGs. 4C and 4D show examples in which CDMA is applied to the A/N of FIGs. 4A and 4B. In these figures, A/Ns are multiplexed using the same time and frequency resources.

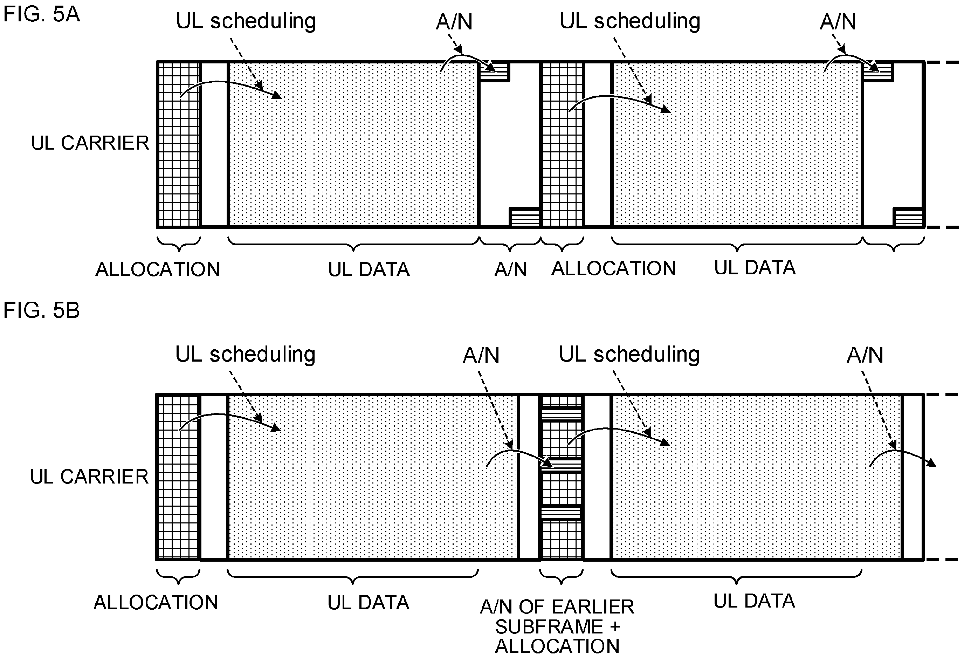

FIGs. 5 provide diagrams to show still other examples of the configuration of self-contained subframes. FIG. 5A shows an example in which self-contained subframes for UL data, such as that shown in FIG. 3C, continue in time. Meanwhile, the configuration of the self-contained subframes for UL data in FIG. 5B is different from FIG. 5A. In the example of FIG. 5B, A/Ns in response to UL data are multiplexed on the allocation period of a subsequent self-contained subframe (for example, the next self-contained subframe), not the same self-contained subframe.

That is, the allocation period and the A/N period may be configured so that their time resources at least partially overlap or are the same. In this case, it is possible to remove the A/N period that is present at the end of each self-contained subframe for UL data in FIG. 5A, so that it is possible to expand (extend) the data period. By configuring self-contained subframes like this, the overhead associated with control signals can be reduced and the UL data resources can be further increased.

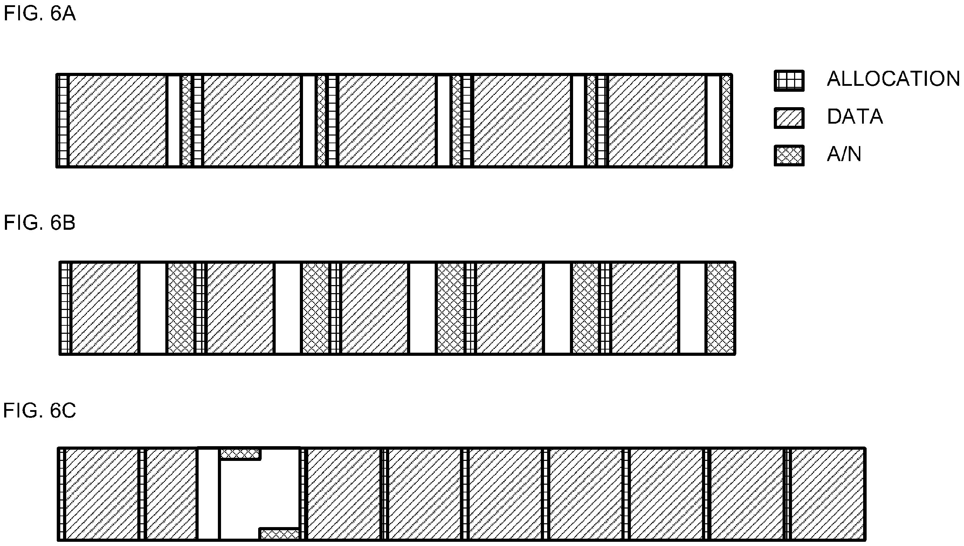

By using the self-contained subframes shown in FIGs. 3 to FIGs. 5, scheduling and HARQ feedback timing control in conventional TDD become unnecessary. However, introduction of self-contained subframes may sacrifice at least one of coverage and spectral efficiency. FIGs. 6 provide diagrams for explaining problems associated with introduction of self-contained subframes for DL data. FIGs. 6A and 6B are diagrams to show examples of self-contained subframes for DL data.

FIG. 6A shows a self-contained subframe for UL data, in which, in order give priority to the spectral efficiency of DL data, there are relatively few radio resources in the allocation period and/or the A/N period, and in which a relatively large amount of radio resources are provided in the data period. In this case, the coverage of the signals transmitted in the allocation period and the A/N period is reduced.

FIG. 6B shows a self-contained subframe for DL data, in which, in order to prioritize uplink coverage, a relatively large amount of radio resources are provided in the A/N period. In this case, it is necessary to make the guard period longer, and thereupon there will be even a smaller amount of radio resources in the data period, and the spectral efficiency of DL data is lowered. The same problem arises also when the radio resource of the allocation period is relatively increased in order to prioritize the downlink coverage.

Also, when the configurations of FIG. 6A and 6B are used, HARQ feedback occurs in every subframe. Spectral efficiency may be reduced by the GP period and the A/N period included in every subframe.

Therefore, when self-contained subframes are used, spectral efficiency or coverage may deteriorate compared to conventional TD-LTE. FIG. 6C shows the frame configuration of TDD UL/DL configuration #5 as an example of existing TD-LTE, and, in this configuration, the ratio of downlink subframes to uplink subframes is approximately 9:1, and the switching gap is produced only once in ten subframes. For this reason, the configuration of FIGs. 6A or 6B is likely to have insufficient spectral efficiency and/or coverage as compared with the configuration of FIG. 6C.

Therefore, the inventors of the present invention have come up with an idea of controlling the ratio of UL and DL (UL/DL ratio) in a predetermined period (for example, one radio frame) by dynamically switching self-contained subframes via physical layer control. According to one aspect of the present invention, unlike existing TDD configurations, it is possible to improve the downlink spectral efficiency in a predetermined period according to the data size and the channel state, and reduce the delay according to the data size. For example, it is possible to realize a trade-off between spectral efficiency and delay.

Now, embodiments of the present invention will be described in detail below with reference to the accompanying drawings. Note that the radio communication methods of the above-described embodiments may be applied individually or may be applied in combination.

Further, the subframes (TTIs) in the following embodiments may be subframes in existing LTE (one ms), may be a period shorter than one ms (for example, 1 to 13 symbols), or may be a period longer than one ms.

Below, it is assumed that the UE knows the configuration of self-contained subframes in advance (for example, the length of each period (the allocation period, the data period, the A/N period, the length of GP, etc.), the amount of radio resources used in each period, etc.). Information on the configuration of self-contained subframes may be reported to the UE by higher layer signaling (for example, RRC (Radio Resource Control) signaling, broadcast information (the MIB (Master Information Block), SIBs (System Information Blocks), etc.), downlink control information (such as DCI) or a combination thereof.

Multiple self-contained subframe configurations that are available for use may be configured in the UE, and, for example, the UE may determine the self-contained subframe configuration to use in each subframe based on downlink control information. Also, the UE may determine information on the configuration of self-contained subframes from a different piece of information reported to the UE, or may decide from the frequency carrier configured for the UE.

In the following description, self-contained subframes for DL data will be simply referred to as "self-contained subframes." Further, subframes in which DL data is transmitted will be also referred to as "DL subframes," "DL-TTIs" or the like. DL subframe in existing LTE systems, future DL subframes (for example, a subframe comprised of an allocation period and a data period, whose lengths are configurable), and self-contained subframes for DL data may be all referred to as "DL subframes."

### (Radio communication method)

### <First embodiment>

In the first embodiment of the present invention, the UL/DL ratio within a radio frame is dynamically changed according to the contents (results) of A/Ns transmitted in the A/N period of self-contained subframes.

In the first embodiment, the UE controls the measure of HARQ feedback to transmit at one time in one self-contained subframe based on the content of the latest delivery acknowledgment information transmitted (the delivery acknowledgment information transmitted immediately before). For example, the UE performs control so that the above measure of HARQ feedback increases every time an ACK is transmitted. In other words, the proportion of DL increases every times an ACK is transmitted. On the other hand, when the result of an HARQ-ACK is a NACK/DTX, the UE may perform control so as to reduce or not increase (maintain) the above measure of HARQ feedback. In case of reducing the measure of feedback, the retransmission delay can be reduced and the influence due to the occurrence of errors can be suppressed. On the other hand, when not increasing the measure of feedback, it becomes easy to schedule retransmission TBS (Transport Block Size) of the same size as error TBS.

Here, the measure of HARQ feedback refers to, for example, the number of DL subframes corresponding to (that is, scheduled for) HARQ-ACKs and/or the amount of DL data (DL-TBS), but this is by no means limiting. The number of DL subframes may be interpreted as the amount of DL data, the number of DL-TTIs, or the like. Hereinafter, the measure of HARQ feedback will be simply referred to as the "measure of feedback."

For example, if the measure of feedback is one subframe, the DL subframe corresponding to an HARQ-ACK is a self-contained subframe in which the HARQ-ACK is transmitted. Also, if the measure of feedback is two or more subframes, the DL subframes to correspond to an HARQ-ACK include a self-contained subframe in which the HARQ-ACK is transmitted and a self-contained subframe in which the length of the allocation period is configured to 0 and/or a normal UL subframe (for example, a DL subframe in existing LTE systems, a future DL subframe, etc.). Note that the GP duration may also be configured to 0 in the self-contained subframe where the length of the A/N period is configured to 0.

When the measure of feedback is two or more subframes (when HARQ-ACKs pertaining to a plurality of pieces of DL data (DL subframes) are fed back), the UE may receive HARQ-ACKs that are generated by applying at least one of HARQ-ACK multiplexing and HARQ-ACK bundling, as in existing LTE systems. The same is true when dealing with multiple pieces of DL data in other embodiments.

When the amount of DL data is configured as the measure of feedback, the number of DL subframes may be determined from the amount of DL data and used for control. For example, when receipt of a certain amount of DL data (DL-TBS) is commanded, the number of DL subframes required to receive the above amount of DL data can be determined based on the number of allocated physical resource blocks (PRBs), the number of MIMO (Multiple Input Multiple Output) layers, the data modulation scheme (the number of bits per symbol), etc. In this case, one piece of DL data (transport block) may be mapped over a plurality of subframes and transmitted. Also, when both the number of DL subframes and the amount of DL data are configured as the measure of feedback, control may be performed based on one of these, or control may be performed taking both of these in consideration.

In order to increase the measure of feedback, a method of doubling the measure of feedback every time an ACK is transmitted or a method of increasing the measure of feedbacks by a predetermined value (for example, by 1) may be used, or other methods may be used as well.

To reduce the measure of feedback, a method of reducing the measure of feedbacks by half every time a NACK is transmitted/every time DTX is yielded, a method of reducing the measure of feedback by a predetermined value (for example, by 1) or a method of setting the measure of feedback to a predetermined value (for example, to 1) may be used, or other methods may be used as well.

Note that the measure of feedback may be increased every time an ACK is transmitted a predetermined number of times, instead of every time an ACK is transmitted. Further, the measure of feedback may be reduced every time a NACK/DTX is transmitted a predetermined number of times, not every time a NACK/DTX is transmitted. That is, the UE may control the measure of feedback based on the content of at least one piece of delivery acknowledgment information transmitted.

Also, when multiple HARQ-ACKs are included in delivery acknowledgment information transmitted, if all the HARQ-ACKs are ACKs, it may be determined that an ACK has been transmitted, or, if at least a part of the HARQ-ACKs is an ACK, it may be determined that an ACK has been transmitted. Also, in the same case, when all the HARQ-ACKs are NACKs/DTXs, it may be determined that a NACK/DTX has been transmitted, or, if at least part of the HARQ-ACKs is a NACK/DTX, it may be determined that a NACK/DTX has been transmitted. Also, in the same case, the increase/decrease of the measure of feedback may be determined according to the proportions of ACKs and NACKs/DTXs included in delivery acknowledgment information.

Information on the method of increasing and reducing the measure of feedback may be reported to the UE by way of higher layer signaling (for example, RRC signaling) or downlink control information (for example, DCI), and the UE may control the measure of feedback based on this information.

The UE can identify the self-contained subframe to transmit HARQ feedback based on the measure of feedback and the location of the subframe where DL data starts being received (for example, the location specified based on the subframe index).

The eNB can determine the measure of feedback for a given UE based on the increasing/reducing method used by the UE and the content of HARQ feedback from the UE, and carry out scheduling taking into account the timing the HARQ feedback is received.

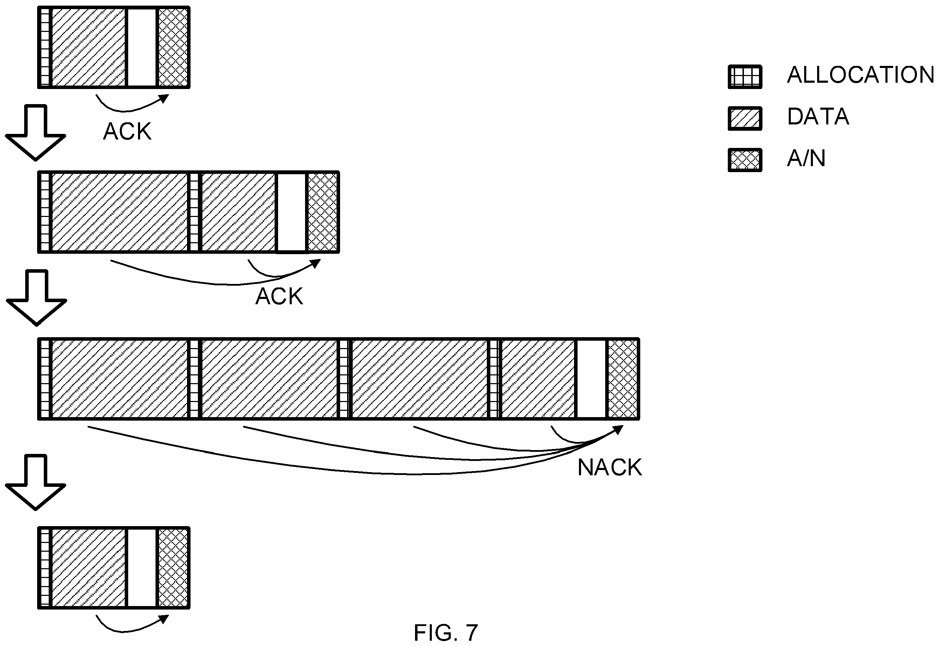

FIG. 7 is a diagram to show an example of HARQ feedback control according to the first embodiment. In this example, the measure of feedback is controlled to double every time an ACK is transmitted, or become 1 every time a NACK is transmitted/a DTX is yielded.

In the uppermost state (referred to as "state 0") in FIG. 7, the measure of feedback is one subframe. In state 0, in the A/N period of a self-contained subframe, the UE transmits only the A/N in response to the DL data in the data period of this self-contained subframe.

If an ACK is transmitted in the A/N period of a self-contained subframe in state 0, the UE doubles the measure of feedback to two subframes (referred to as "state 1"). In state 1, in the A/N period of a self-contained subframe, the UE transmits an A/N in response to the DL data in the data period of the self-contained subframe, and, in addition to this, the UE transmits an A/N in response to the DL data in the subframe one subframe before.

In state 1, when an ACK is transmitted in the A/N period of a self-contained subframe, the UE doubles the measure of feedback, to four subframes (referred to as "state 2"). In state 2, in the A/N period of a self-contained subframe, the UE transmits an A/N in response to the DL data in the data period of the self-contained subframe, and, in addition, the UE transmits an A/N in response to the DL data in each of one to three preceding subframes.

In the case of state 2, if a NACK is transmitted in the A/N period of a self-contained subframe, the UE sets the measure of feedback to 1 (back to state 0).

According to the first embodiment described above, since HARQ-ACKs can be quickly transmitted at the start of communication or when the size of UL data is small (small packet), the delay can be reduced. Also, the larger the amount of data, the larger the number of DL subframes, so that the feedback-induced overhead decreases and the spectral efficiency can be improved.

### <Variation of the first embodiment>

For the above-described measure of feedback, the maximum value may be limited (configured). When the measure of feedback reaches the maximum value, control may be performed not to increase the measure of feedback even if an ACK is transmitted in a self-contained subframe. This makes it possible to take a trade-off between spectral efficiency and delay.

The maximum amount of UL data (UL-TBS) corresponding to HARQ feedback in one A/N period may be configured by, for example, higher layer signaling, or may be held (specified) in the UE in advance. The values that can be configured or specified as the maximum value may include 1.

Also, the minimum value of the measure of feedback may be limited (configured). When the measure of feedback reaches the minimum value, control may be performed so that the measure of feedback is not decreased and/or not maintained even if a NACK/DTX is transmitted in a self-contained subframe.

Also, if at least one of the following conditions (1) to (4) is satisfied after the measure of feedback once reaches the maximum value, the UE may reduce the measure of feedback to a predetermined value (for example, to the minimum value, to a value of half of the maximum value, etc.):
(1) the UE has failed to decode DL data (a NACK or a DTX has been transmitted);
(2) a predetermined time (for example, time to match a number of subframes twice the maximum value) has passed without scheduling;
(3) a predetermined amount of DL data (DL-TBS) or a predetermined number of DL subframes are scheduled; and
(4) the UE enters one of IDLE mode (RRC idle) and discontinuous reception (DRX) mode, or the uplink is in an asynchronous state (UL un-sync).

Here, the maximum value and the minimum value of the measure of feedback, the predetermined time, the predetermined amount, the predetermined number and the like in the above conditions (2) and (3) may be configured by high layer signaling or the like , and may be held (prescribed) in the UE in advance. In addition, once the measure of feedback reaches the maximum value, control may be performed so that, when only one of the conditions is satisfied, the measure of feedback is kept at the maximum value, and, when a plurality of conditions are satisfied, the measure of feedback is reduced to a predetermined number.

### <Second embodiment

In a second embodiment of the present invention, the UL/DL ratio in a radio frame is dynamically changed according to the contents of downlink control signals received in the allocation period in self-contained subframes.

In the second embodiment, the UE identifies the above measure of feedback and/or HARQ feedback-transmitting self-contained subframes based on information that is explicitly reported in the allocation period. The second embodiment is roughly divided into two according to the contents of this information (embodiments 2.1 and 2.2). This information may be referred to as "feedback subframe specifying information," for example, or referred to simply as "specifying information."

According to embodiment 2.1, the UE calculates the above-noted measure of feedback and/or HARQ feedback-transmitting self-contained subframes based on information (bit field) that is reported as specifying information and that indicates the number of DL subframes corresponding to HARQ-ACKs and/or the amount of DL data (DL-TBS).

According to embodiment 2.2, the UE calculates the above-noted measure of feedback and/or HARQ feedback-transmitting self-contained subframes based on information (bit field) that is reported as specifying information and that indicates the last DL subframe corresponding to HARQ-ACKs and/or the last DL data.

The specifying information can be reported in a predetermined bit field in downlink control information (for example, DCI). For example, the specifying information may be reported using a new bit field that is not defined in existing LTE systems, or may be reported by replacing at least a part of the bit fields in existing DCI. Existing bit fields such as the resource allocation (RA) field, the MCS (Modulation and Coding Scheme) field, the HPN (HARQ Process Number) field and so on can be used, or a combination of these can be used. Note that other fields can be re-interpreted and used as well.

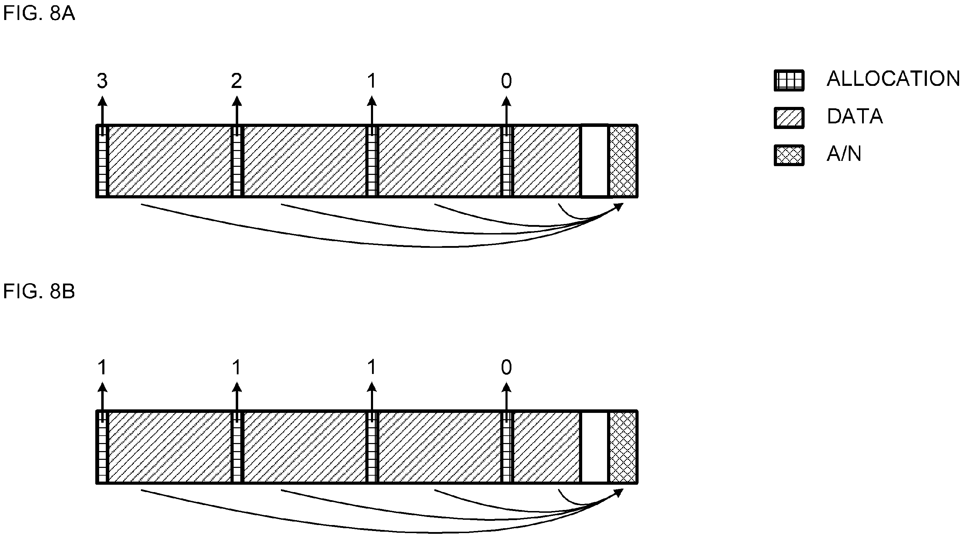

Referring to FIGs. 8, the second embodiment will be described in detail. FIGs. 8 provide diagrams to show examples of HARQ feedback control according to the second embodiment. FIGs. 8A and 8B correspond to embodiments 2.1 and 2.2, respectively. FIGs. 8 show the contents of specifying information reported in the allocation period. In addition, FIGs. 8 show cases where the number of subframes corresponding to HARQ-ACKs is four, but this is not limiting.

In FIG. 8A, the specifying information is reported to be decremented one by one from "3," "2," "1," and "0," in order, from the leftmost subframe. The UE determines that the subframe in which "0" is indicated as specifying information is a self-contained subframe for transmitting HARQ feedback, and the UE transmits HARQ-ACKs in response to the DL subframes received up till then (DL subframes corresponding to the specifying information other than "0") and the DL data in the self-contained subframe, in the A/N period of the self-contained subframe.

That is, in the example of FIG. 8A, the specifying information can be regarded as information that indicates the number of remaining DL subframes and/or the amount of remaining DL data in the number of DL subframes corresponding to HARQ-ACKs and/or in the amount of DL data.

In FIG. 8B, the specifying information is reported as "1," "1," "1," and "0," in order, from the leftmost subframe. The UE determines that the subframe in which "0" is indicated as specifying information is a self-contained subframe for transmitting HARQ feedback, and the UE transmits HARQ-ACKs in response to the DL subframes received up till then (DL subframes corresponding to the specifying information = "1") and the DL data in the self-contained subframe, in the A/N period of the self-contained subframe.

That is, in the example of FIG. 8B, the specifying information can be regarded as information that indicates whether a subframe (TTI), in which downlink control information including specifying information is received, is a self-contained subframe (TTI) for transmitting HARQ feedback. When the specifying information received in a certain subframe is "0," this indicates that the subframe is a subframe for transmitting HARQ feedback (that this subframe is the last DL subframe and is the subframe including the last DL data), while, when the specifying information is "1", this indicates that the subframe is not a subframe for transmitting HARQ feedback (that the subframe is not the last DL subframe, and DL data exists in succeeding subframes).

In the second embodiment, if the self-contained subframe to transmit HARQ feedback cannot be identified (for example, in the case of FIGs. 8, when it is not possible to receive downlink control information including "0" as specifying information), the UE may not transmit the HARQ-ACKs for all the DL data corresponding to this HARQ-ACK transmission. In this case, the eNB cannot receive the HARQ-ACKs for the DL data, and the eNB retransmits all the DL data. This ensures that the recognition of HARQ-ACK transmission timing matches and that retransmission can be made reliably.

The specifying information is not limited to the above examples, and a self-contained subframe may be specified by using the result of applying predetermined operation (for example, arithmetic operation) to the specifying information, or a subframe in which a predetermined value (for example, 1) is specified as specifying information may be identified as a subframe for transmitting HARQ feedback.

Note that, in embodiments 2.1 and 2.2, the specifying information may include information (bit field) indicating the total number of DL subframes corresponding to HARQ-ACKs and/or the total amount of DL data. For example, in the example of FIG. 8A, the information {the number of remaining DL subframes corresponding to HARQ-ACKs, the total number of DL subframes corresponding to HARQ-ACKs} = {3, 4}, {2, 4}, {1, 4} and {0, 4} may be reported, in order, from the leftmost subframe. According to this configuration, the UE can identify a subframe, in which no specifying information and/or DL data-scheduling downlink control information and the like are detected, so that it is possible to perform control to feed back a NACK/a DTX in response to this subframe.

According to the second embodiment described above, the UL/DL ratio can be changed dynamically with reference to downlink control information including specifying information. By this means, it is possible to exert control so that HARQ-ACKs are fed back quickly in response to UL data of small size and to exert control so that UL data of large size can be transmitted in a large number of consecutive UL subframes, thereby enabling flexible control of delay and spectral efficiency.

### <Third Embodiment>

A third embodiment of the present invention is the same as the second embodiment in that the UL/DL ratio in a radio frame is dynamically changed according to the contents of downlink control signals received in the allocation period in self-contained subframes, but the third embodiment is different from the second embodiment in that multiple subframes are scheduled by a downlink control signal (multi-subframe scheduling).

When multi-subframe scheduling is used, it is sufficient to transmit a downlink control signal only in the first one of a plurality of consecutive subframes, so that the allocation period can be removed from the subsequent subframes, and the spectral efficiency can be further improved.

In multi-subframe scheduling, scheduling information for two or more subframes may be reported by a single control signal (DCI). In this case, the scheduling information is reported in the same control signal format (DCI format) and/or using the same number of bits regardless of the number of subframes in the measure of feedback, so that the blind decoding of control signals performed by the UE can be controlled likewise irrespective of the measure of feedback.

Alternatively, when the control signal format (DCI format) or the number of bits included in the DCI format changes according to the number of subframes in the measure of feedback, it is easy to indicate different scheduling information according to subframes included in the same measure of feedback, and therefore the flexibility of scheduling can be enhanced.

In multi-subframe scheduling, scheduling may be performed using the same number of control signals (DCI) as the number of subframes to be scheduled. That is, the UE can perform blind decoding on the assumption that a number of control signal formats (DCI formats) to match the number of subframes in the measure of feedback are detected in a given allocation period.

In the third embodiment, the specifying information is reported in the allocation period in the first one of consecutive DL subframes (UL-TBS). The specifying information may be information (bit field) indicating the total number of DL subframes corresponding to HARQ-ACKs and/or the total amount of DL data.

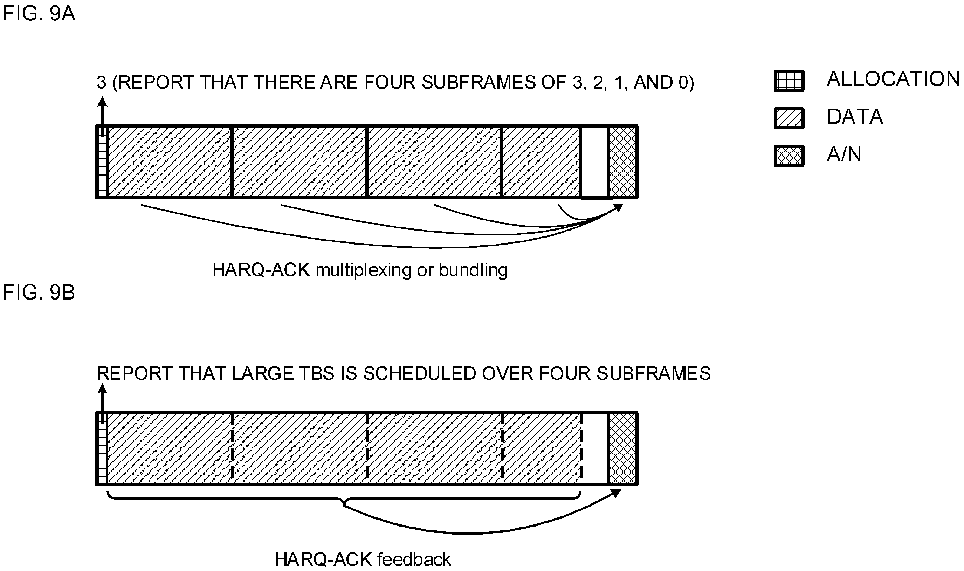

FIGs. 9 provide diagrams to show examples of HARQ feedback control according to the third embodiment. FIGs. 9 show the contents of specifying information reported in the allocation period. In addition, FIGs. 9 show a case where the number of subframes corresponding to HARQ-ACKs is four, but this is not limiting.

In FIG. 9A, the specifying information is configured to indicate that the total number of DL subframes corresponding to HARQ-ACKs is four. In this case, the specifying information may be, for example, "3" (information to report that there are four subframes from 3 to 0) or "4" (information to report that there are four subframes). In the example of FIG. 8A, each DL subframe corresponds to a DL-TBS, and, in the UE, the HARQ-ACKs for these four DL-TBSs may be multiplexed and transmitted in a self-contained subframe, or the HARQ-ACKs for these four DL-TBSs may be bundled and transmitted.

Alternatively, the UE may recognize that UL data spanning multiple subframes is present (allocated) based on the DL-TBS and the frequency resources allocated. In FIG. 9B, the specifying information is configured to indicate that a large TBS spanning four subframes is scheduled. Here, the specifying information may be, for example, the TBS of DL data (DL-TBS) and the number of PRBs allocated. The UE can determine the number of subframes allocated to DL data (= the total number of DL subframes corresponding to HARQ-ACKs) based on, for example: (DL-TBS)/(the number of allocated PRBs × the modulation scheme). When downlink MIMO transmission is applied and DL data is received in multiple layers, the number of subframes allocated to DL data can be determined based on: (DL-TBS)/(the number of allocated PRBs × the modulation scheme × the number of MIMO layers).

In this case, one large TB is transmitted in multiple subframes, so that the UE does not need to transmit multiple HARQ-ACKs in response to DL data that is received (UE only needs to transmit one HARQ-ACK).

In existing LTE, each TB is transmitted in one subframe. Here, the order of mapping a data modulation symbol sequence to radio resources in existing LTE is that symbols under a given symbol index i (i = 0 to 14) are mapped in ascending order of subcarrier indices k, and, when the symbols under this symbol index i are mapped all the way to the last subcarrier index in the PRB allocated, the symbol index i is incremented by 1, and the symbols under this symbol index are again mapped likewise, in ascending order of subcarrier indices i, and the same procedure is applied over all resources.

When one large TB is transmitted in multiple subframes, a plurality of subframes, to which this TB is mapped, may be regarded as one large subframe, and the above-described mapping of data modulation symbol sequences to radio resource in existing LTE may be applied. In this case, it is possible to realize DL transmission of the multiple subframes in the same procedure as in existing LTE, so it is possible to reduce the processing load of the eNB and/or the terminal. Alternatively, the same mapping procedure as in existing LTE may be applied sequentially to each subframe of multiple subframes to which the TB is mapped. In this case, since the probability that the symbols that are relatively close in the data modulation symbol sequence are mapped to different subcarriers increases, the frequency diversity effect can be enhanced.

According to the third embodiment described above, the UL/DL ratio can be dynamically changed using downlink control information including specifying information, and, furthermore, downlink control channels can be removed by means of multi-subframe scheduling, so that it is possible to improve the spectral efficiency further.

In the third embodiment, an example has been shown in which multi-subframe scheduling is applied to the second embodiment, but the present invention is not limited to this. For example, as one embodiment of the present invention, a configuration to apply multi-subframe scheduling to the first embodiment can be used.

For example, although a configuration has been shown with reference to FIGs. 9 in which a control channel is included only in the first subframe and not included in the second and subsequent subframes, a subframe configuration, in which the control channel is included also in the second and subsequent subframes, may be adopted as well. For example, when the UE is scheduled data spanning multiple subframes by the control channel of the first subframe (or detects control information), the UE may not monitor the control channel in subsequent (for example, the second to fourth)subframes where the data is allocated. Further, in the subsequent subframes, data may not be mapped in the time period of the control channel.

### <Variations>

In each of the above embodiments, an example in which DL data and control signals are time-division-multiplexed (TDM) has been shown, but the present invention is not limited to this. For example, DL data and control signals may be frequency-division-multiplexed (FDM). In this case, the allocation period and the data period overlap (part or all), and are placed in the same period (time). Frequency-division-multiplexed control signals may be transmitted in the existing EPDCCH, for example.

When a configuration in which the allocation period and the data period are frequency-division-multiplexed is adopted, different radio resource configurations may be applied between self-contained subframes in which HARQ-ACKs are transmitted and other DL data-receiving subframes than the self-contained subframes (variation 1). For example, the time resource (for example, the time duration (the number of symbols etc.)) of a downlink control channel (allocation period) may be changed depending on whether or not the subframe is a self-contained subframe.

Note that the time resource of the downlink control channel may be configured (reported) in the UE by higher layer signaling (for example, RRC signaling), by downlink control information or by combining these, the time resource of the downlink control channel may be the same in length (the same in value) as the time resource of the data channel (data period) in the same subframe.

Also, it is preferable that the frequency resource (frequency location) and/or the code resource (for example, the identifier (RNTI: Radio Network Temporary Identifier) for scrambling DCI) where the downlink control channel is allocated varies depending on whether the subframe is a self-contained subframe or not. By doing so, it is possible to prevent the situations where the downlink control channel is decoded by error. Note that information on these frequency resources and code resources may be reported to the UE via higher layer signaling (for example, RRC signaling).

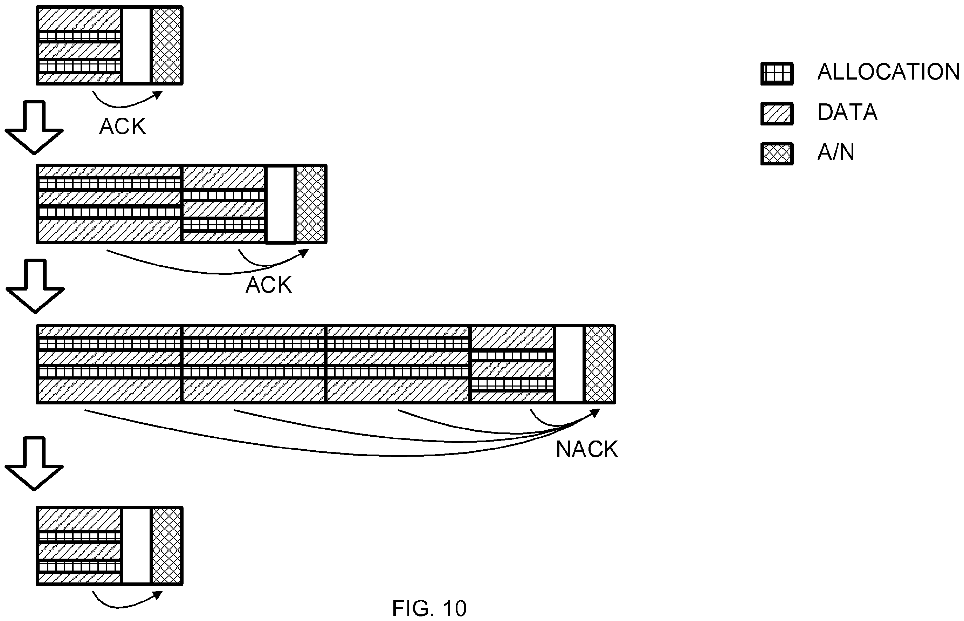

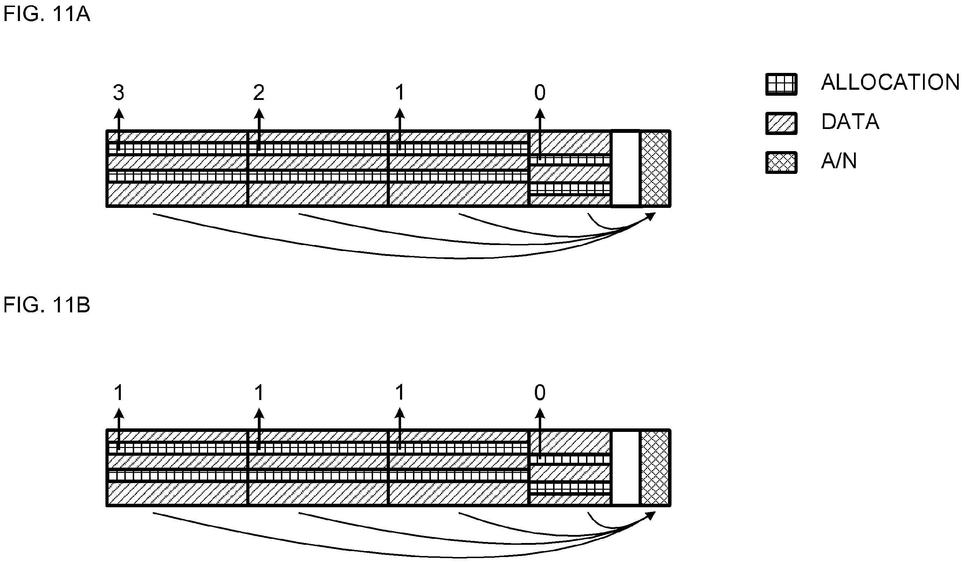

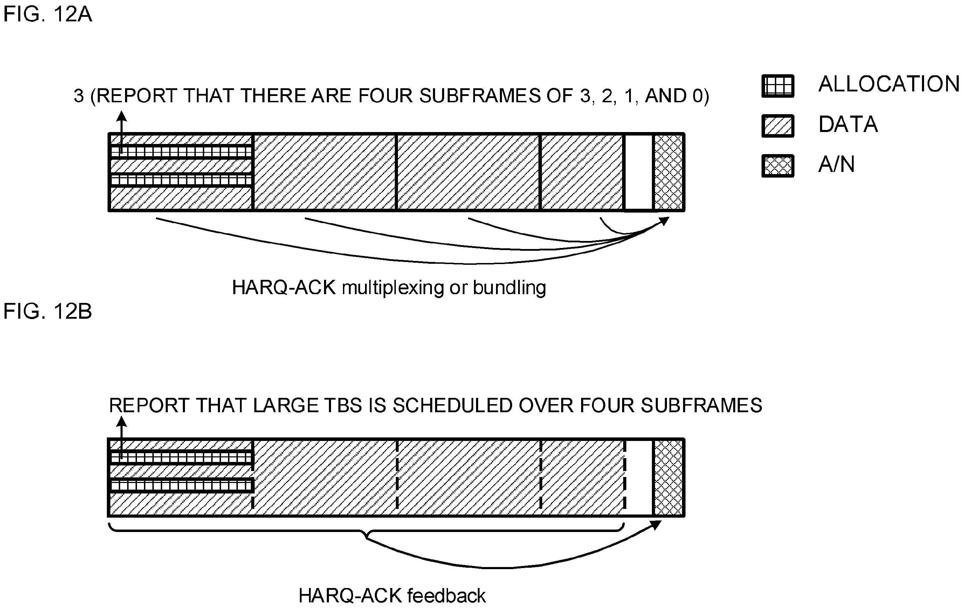

FIGs. 10 provide diagrams to show examples of variations corresponding to FIGs. 8. FIGs. 11 provide diagrams to show examples of variations corresponding to FIGs. 8. FIGs. 12 provide diagrams to show examples of variations corresponding to FIGs. 8. As shown in FIGs. 10 to 12, in variation 1, the configuration of the control channel to be monitored by the UE varies depending on whether the measure of feedback is one subframe or the measure of feedback is two subframes or more.

In the case of FIG. 10, the UE knows the measure of feedback, so that the UE can decode only one control channel by specifying the control channel to be monitored. On the other hand, in the cases of FIGs. 11 and 12, the UE does not know the measure of feedback until decoding the downlink control signal. For this reason, the UE needs to perform blind decoding for a plurality of control channels at the time DL data is not yet received, and therefore the processing load on the UE is relatively large.

Therefore, when a configuration in which the allocation period and the data period are frequency-division-multiplexed is adopted, the same downlink control channel configuration (for example, the same time duration (the same number of symbols) and the same frequency/code resource) may be applied between the self-contained subframes in which an HARQ-ACK is transmitted (the subframe in which DL data is last received) and the subframe where DL data transmission starts (the subframe where DL data is received first) (variation 2).

In this case, in the subframe in which DL data is first received and the subframe in which DL data is last received, the UE may receive the downlink control channel (downlink control information) in different radio resources (for example, in different time durations (different numbers of symbols) and/or different frequency/code resources) than other DL data-receiving subframes than the above subframes. Note that when multi-subframe scheduling is adopted, in the subframe where DL data is first received, the downlink control channel may be received in the same radio resource as in the self-contained subframe for transmitting an HARQ-ACK.

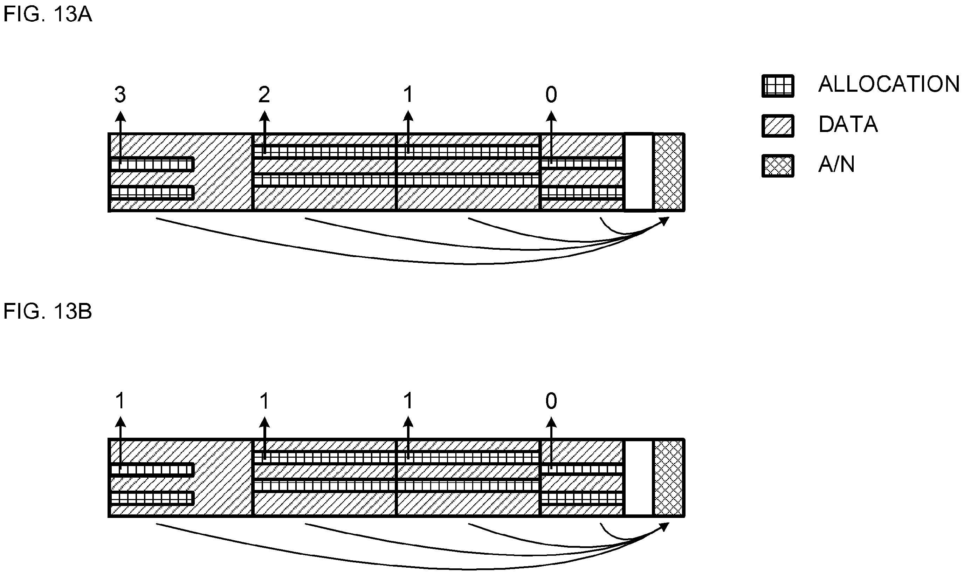

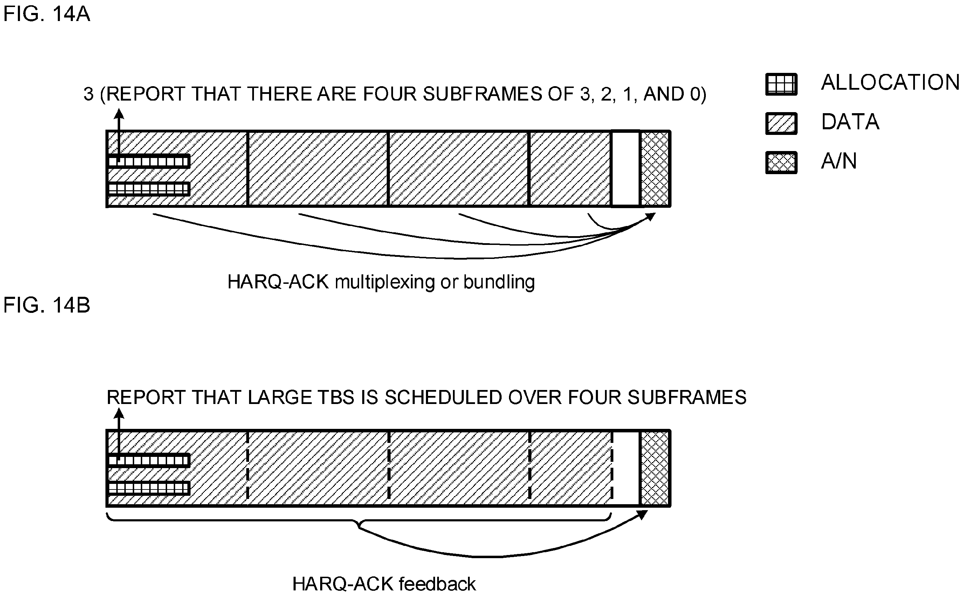

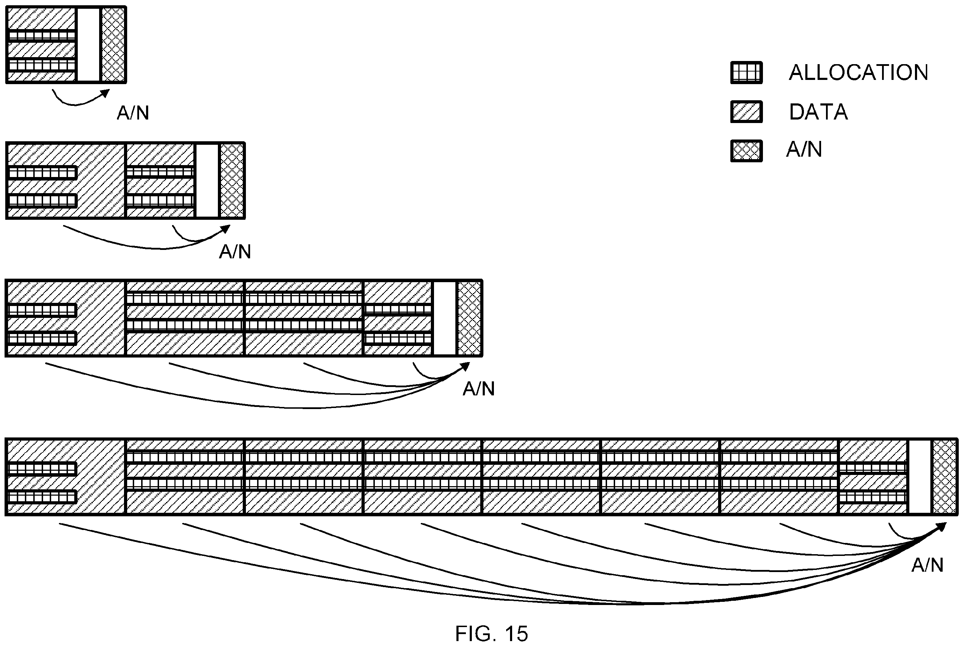

FIGs. 13 provide diagrams to show examples of variations corresponding to FIGs. 8. FIGs. 14 provide diagrams to show examples of variations corresponding to FIGs. 8. FIG. 15 is a diagram to show an example of variation 2 when the measure of feedback is 1, 2, 4, and 8. As shown in FIGs. 13 to 15, in variation 2, in the subframe where DL data transmission starts, the same downlink control channel as in a self-contained subframe is allocated, regardless of whether the subframe is a self-contained subframe or a DL subframe.

According to the configuration of variation 2, the UE has to try detecting the downlink control channel only in self-contained subframes when DL data is not yet received, so that, even when a configuration in which the allocation period and the data period are frequency-division-multiplexed is adopted, it is possible to suppress an increase in the processing load of the UE.

Note that the configurations of these variations can also be applied when a configuration in which the allocation period and the data period are time-division-multiplexed is adopted. For example, the time and/or frequency and/or code resource of the downlink control channel (allocation period) may be changed depending on whether or not the subframe is a self-contained subframe.

Each of the above embodiments has been described primarily focusing on the operation of the UE, but the eNB may be controlled in association with UE operations based on the above description. For example, the transmission (reception) in the UE can be interpreted as reception (transmission) in the eNB.

### (Radio Communication System)

Now, the structure of the radio communication system according to an embodiment of the present invention will be described below. In this radio communication system, communication is performed using any one of or a combination of the radio communication methods according to the above embodiments of the present invention.

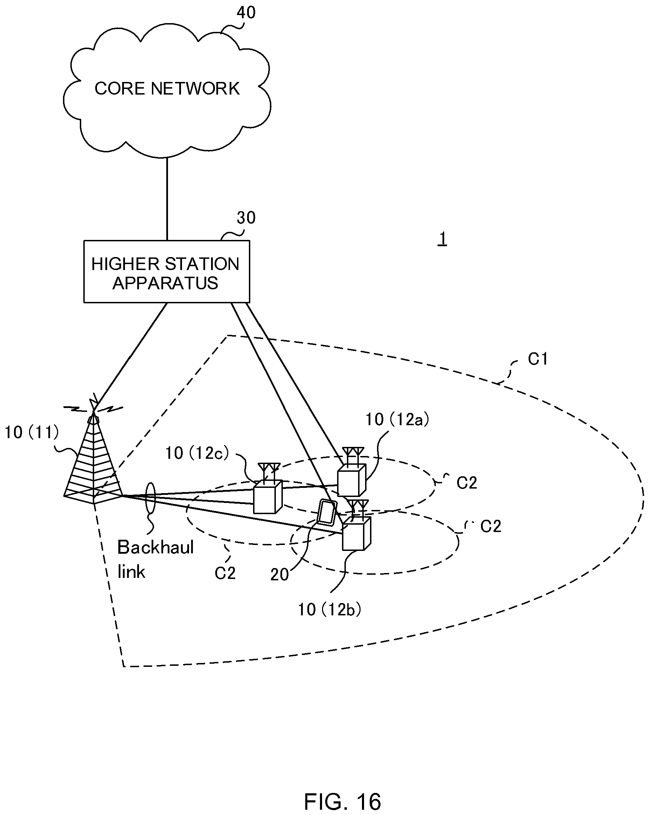

FIG. 16 is a diagram to show an example of a schematic structure of a radio communication system according to one embodiment of the present invention. The radio communication system 1 can adopt carrier aggregation (CA) and/or dual connectivity (DC) to group a plurality of fundamental frequency blocks (component carriers) into one, where the LTE system bandwidth (for example, 20 MHz) constitutes one unit.

Note that the radio communication system 1 may be referred to as "LTE" (Long Term Evolution), "LTE-A" (LTE-Advanced), "LTE-B" (LTE-Beyond), "SUPER 3G," "IMT-Advanced," "4G" (4th generation mobile communication system), "5G" (5th generation mobile communication system), "FRA" (Future Radio Access), "New-RAT" (Radio Access Technology) and so on, or may be seen as a system to implement these.

The radio communication system 1 shown in FIG. 12 includes a radio base station 11 that forms a macro cell C1, and radio base stations 12 (12a to 12c) that form small cells C2, which are placed within the macro cell C1 and which are narrower than the macro cell C1. Also, user terminals 20 are placed in the macro cell C1 and in each small cell C2.

The user terminals 20 can connect with both the radio base station 11 and the radio base stations 12. The user terminals 20 may use the macro cell C1 and the small cells C2, which use different frequencies, at the same time, by means of CA or DC. Further, the user terminals 20 may apply CA or DC using a plurality of cells (CC) (for example, five or fewer CCs or six or more CCs).

Between the user terminals 20 and the radio base station 11, communication can be carried out using a carrier of a relatively low frequency band (for example, 2 GHz) and a narrow bandwidth (referred to as, for example, an "existing carrier," a "legacy carrier" and so on). Meanwhile, between the user terminals 20 and the radio base stations 12, a carrier of a relatively high frequency band (for example, 3.5 GHz, 5 GHz and so on) and a wide bandwidth may be used, or the same carrier as that used in the radio base station 11 may be used. Note that the configuration of the frequency band for use in each radio base station is by no means limited to these.

A structure may be employed here in which wire connection (for example, means in compliance with the CPRI (Common Public Radio Interface) such as optical fiber, the X2 interface and so on) or wireless connection is established between the radio base station 11 and the radio base station 12 (or between two radio base stations 12).

The radio base station 11 and the radio base stations 12 are each connected with a higher station apparatus 30, and are connected with a core network 40 via the higher station apparatus 30. Note that the higher station apparatus 30 may be, for example, an access gateway apparatus, a radio network controller (RNC), a mobility management entity (MME) and so on, but is by no means limited to these. Also, each radio base station 12 may be connected with higher station apparatus 30 via the radio base station 11.

Note that the radio base station 11 is a radio base station having a relatively wide coverage, and may be referred to as a "macro base station," a "central node," an "eNB" (eNodeB), a "transmitting/receiving point" and so on. Also, the radio base stations 12 are radio base stations having local coverages, and may be referred to as "small base stations," "micro base stations," "pico base stations," "femto base stations," "HeNBs" (Home eNodeBs), "RRHs" (Remote Radio Heads), "transmitting/receiving points" and so on. Hereinafter the radio base stations 11 and 12 will be collectively referred to as "radio base stations 10," unless specified otherwise.

The user terminals 20 are terminals to support various communication schemes such as LTE, LTE-A and so on, and may be either mobile communication terminals or stationary communication terminals.

In the radio communication system 1, as radio access schemes, OFDMA (Orthogonal Frequency Division Multiple Access) is applied to the downlink, and SC-FDMA (Single-Carrier Frequency Division Multiple Access) is applied to the uplink.

OFDMA is a multi-carrier communication scheme to make communication by dividing a frequency bandwidth into a plurality of narrow frequency bandwidths (subcarriers) and mapping data to each subcarrier. SC-FDMA is a single-carrier communication scheme to mitigate interference between terminals by dividing the system bandwidth into bands formed with one or continuous resource blocks per terminal, and allowing a plurality of terminals to use mutually different bands. Note that, uplink and downlink radio access schemes are not limited to these combinations, and other radio access schemes may be used.

In the radio communication system 1, a downlink shared channel (PDSCH: Physical Downlink Shared CHannel), which is used by each user terminal 20 on a shared basis, a broadcast channel (PBCH: Physical Broadcast CHannel), downlink L1/L2 control channels and so on are used as downlink channels. User data, higher layer control information and predetermined SIBs (System Information Blocks) are communicated in the PDSCH. Also, the MIB (Master Information Blocks) is communicated in the PBCH.

The downlink L1/L2 control channels include a PDCCH (Physical Downlink Control CHannel), an EPDCCH (Enhanced Physical Downlink Control CHannel), a PCFICH (Physical Control Format Indicator CHannel), a PHICH (Physical Hybrid-ARQ Indicator CHannel) and so on. Downlink control information (DCI) including PDSCH and PUSCH scheduling information is communicated by the PDCCH. The number of OFDM symbols to use for the PDCCH is communicated by the PCFICH. Delivery acknowledgment information (also referred to as, for example, "retransmission control information," "HARQ-ACKs," "ACK/NACKs," etc.) of HARQ (Hybrid Automatic Repeat reQuest) in response to the PUSCH is transmitted by the PHICH. The EPDCCH is frequency-division-multiplexed with the PDSCH (downlink shared data channel) and used to communicate DCI and so on, like the PDCCH.

In the radio communication system 1, an uplink shared channel (PUSCH: Physical Uplink Shared CHannel), which is used by each user terminal 20 on a shared basis, an uplink control channel (PUCCH: Physical Uplink Control CHannel), a random access channel (PRACH: Physical Random Access CHannel) and so on are used as uplink channels. User data and higher layer control information are communicated by the PUSCH. Also, downlink radio quality information (CQI: Channel Quality Indicator), delivery acknowledgement signals and so on are communicated by the PUCCH. By means of the PRACH, random access preambles for establishing connections with cells are communicated.

In the radio communication systems 1, the cell-specific reference signal (CRS: Cell-specific Reference Signal), the channel state information reference signal (CSI-RS: Channel State Information-Reference Signal), the demodulation reference signal (DMRS: DeModulation Reference Signal), the positioning reference signal (PRS: Positioning Reference Signal) and so on are communicated as downlink reference signals. Also, in the radio communication system 1, the measurement reference signal (SRS: Sounding Reference Signal), the demodulation reference signal (DMRS) and so on are communicated as uplink reference signals. Note that, DMRSs may be referred to as "user terminal-specific reference signals" (UE-specific Reference Signals). Also, the reference signals to be communicated are by no means limited to these.

### (Radio base station)

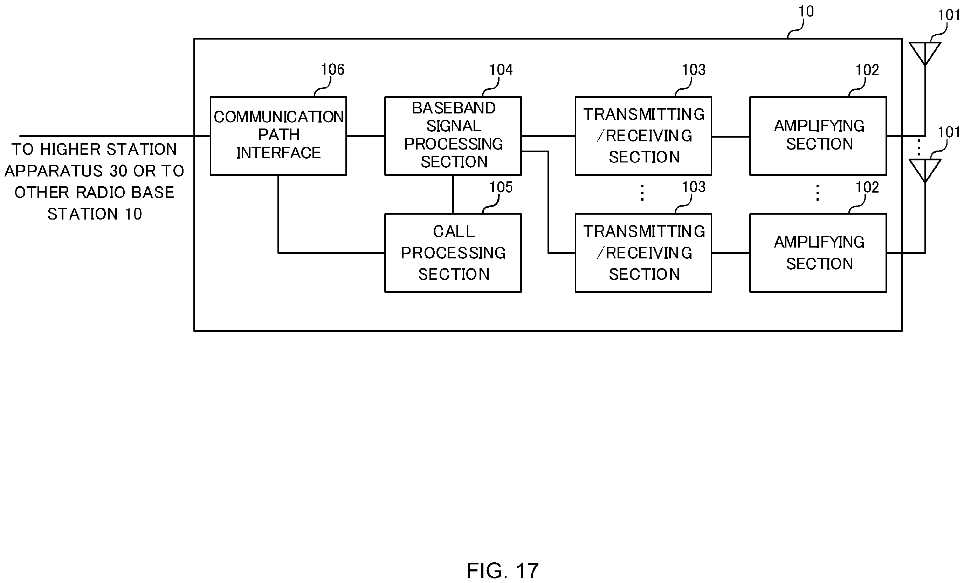

FIG. 17 is a diagram to show an example of an overall structure of a radio base station according to one embodiment of the present invention. A radio base station 10 has a plurality of transmitting/receiving antennas 101, amplifying sections 102, transmitting/receiving sections 103, a baseband signal processing section 104, a call processing section 105 and a communication path interface 106. Note that one or more transmitting/receiving antennas 101, amplifying sections 102 and transmitting/receiving sections 103 may be provided.

User data to be transmitted from the radio base station 10 to a user terminal 20 on the downlink is input from the higher station apparatus 30 to the baseband signal processing section 104, via the communication path interface 106.

In the baseband signal processing section 104, the user data is subjected to a PDCP (Packet Data Convergence Protocol) layer process, user data division and coupling, RLC (Radio Link Control) layer transmission processes such as RLC retransmission control, MAC (Medium Access Control) retransmission control (for example, an HARQ (Hybrid Automatic Repeat reQuest) transmission process), scheduling, transport format selection, channel coding, an inverse fast Fourier transform (IFFT) process and a precoding process, and the result is forwarded to each transmitting/receiving section 103. Furthermore, downlink control signals are also subjected to transmission processes such as channel coding and an inverse fast Fourier transform, and forwarded to each transmitting/receiving section 103.

Baseband signals that are pre-coded and output from the baseband signal processing section 104 on a per antenna basis are converted into a radio frequency band in the transmitting/receiving sections 103, and then transmitted. The radio frequency signals having been subjected to frequency conversion in the transmitting/receiving sections 103 are amplified in the amplifying sections 102, and transmitted from the transmitting/receiving antennas 101. The transmitting/receiving sections 103 can be constituted by transmitters/receivers, transmitting/receiving circuits or transmitting/receiving devices that can be described based on common understanding of the technical field to which the present invention pertains. Note that a transmitting/receiving section 103 may be structured as a transmitting/receiving section in one entity, or may be constituted by a transmission section and a receiving section.

Meanwhile, as for uplink signals, radio frequency signals that are received in the transmitting/receiving antennas 101 are each amplified in the amplifying sections 102. The transmitting/receiving sections 103 receive the uplink signals amplified in the amplifying sections 102. The received signals are converted into the baseband signal through frequency conversion in the transmitting/receiving sections 103 and output to the baseband signal processing section 104.

In the baseband signal processing section 104, user data that is included in the uplink signals that are input is subjected to a fast Fourier transform (FFT) process, an inverse discrete Fourier transform (IDFT) process, error correction decoding, a MAC retransmission control receiving process, and RLC layer and PDCP layer receiving processes, and forwarded to the higher station apparatus 30 via the communication path interface 106. The call processing section 105 performs call processing such as setting up and releasing communication channels, manages the state of the radio base station 10 and manages the radio resources.

The communication path interface section 106 transmits and receives signals to and from the higher station apparatus 30 via a predetermined interface. Also, the communication path interface 106 may transmit and receive signals (backhaul signaling) with other radio base stations 10 via an inter-base station interface (for example, an interface in compliance with the CPRI (Common Public Radio Interface) such as optical fiber, the X2 interface, etc.).

In addition, in the allocation period determined by the control section 301, the transmitting/receiving sections 103 transmit DCI related to transmission and/or reception of data to the user terminal 20. For example, the transmitting/receiving sections 103 may transmit information (DL grant) that commands reception of a downlink shared channel (PDSCH). Further, the transmitting/receiving sections 103 may transmit information (UL grant) that commands transmission of an uplink shared channel (PUSCH). These DCIs may be transmitted in the same TTI or may be transmitted in different TTIs. Further, these DCIs may be transmitted on the same frequency carrier or may be transmitted on different frequency carriers.

The transmitting/receiving sections 103 transmit downlink data (PDSCH) in the data period in DL data self-contained subframes and in DL subframes selected by the control section 301. Further, the transmitting/receiving sections 103 may transmit HARQ-ACKs in response to uplink data (PUSCH) in the delivery acknowledgment period in UL data self-contained subframes selected by the control section 301.

Further, the transmitting/receiving sections 103 may transmit, to the user terminal 20, information on the configuration of self-contained subframes, feedback subframe specifying information (specifying information), information on the method of increasing/reducing the measure of feedback, information on frequency resources and/or code resources where a downlink control channel is allocated, and so on.

The transmitting/receiving sections 103 may receive uplink data from the user terminal 20 in an uplink shared channel (for example, the PUSCH) in the data period in UL data self-contained subframes and/or in UL subframes determined by the control section 301. The transmitting/receiving sections 103 may receive HARQ-ACKs in response to downlink data transmitted in the downlink shared channel (PDSCH), in the delivery acknowledgment period in DL data self-contained subframes selected by the control section 301.

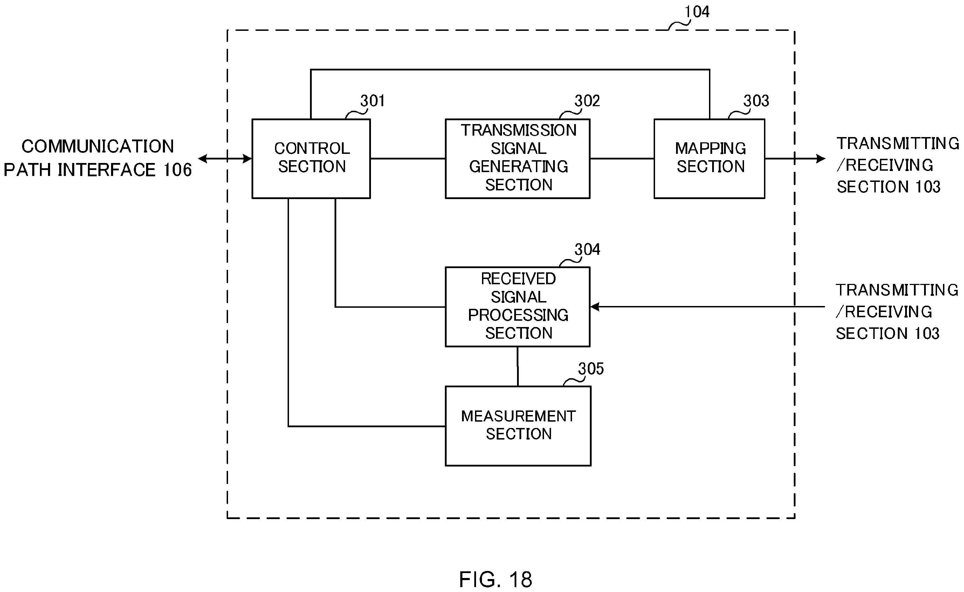

FIG. 18 is a diagram to show an example of functional structure of a radio base station according to one embodiment of the present invention. Note that, although FIG. 18 primarily shows functional blocks that pertain to characteristic parts of the present embodiment, the radio base station 10 has other functional blocks that are necessary for radio communication as well. As shown in FIG. 14, the baseband signal processing section 104 has a control section (scheduler) 301, a transmission signal generating section 302, a mapping section 303, a received signal processing section 304 and a measurement section 305.

The control section (scheduler) 301 controls the whole of the radio base station 10. The control section 301 can be constituted by a controller, a control circuit or a control device that can be described based on common understanding of the technical field to which the present invention pertains.

The control section 301, for example, controls the generation of signals in the transmission signal generating section 302, the allocation of signals by the mapping section 303, and so on. Furthermore, the control section 301 controls the signal receiving processes in the received signal processing section 304, the measurements of signals in the measurement section 305, and so on.

The control section 301 controls the scheduling (for example, resource allocation) of downlink data signals that are transmitted in the PDSCH and downlink control signals that are communicated in the PDCCH and/or the EPDCCH. The control section 301 controls the generation of downlink control signals (for example, delivery acknowledgement information and so on) and downlink data signals, based on the results of deciding whether or not retransmission control is necessary for uplink data signals, and so on. Also, the control section 301 controls the scheduling of downlink reference signals such as synchronization signals (for example, the PSS (Primary Synchronization Signal)/SSS (Secondary Synchronization Signal)), the CRS, the CSI-RS, the DM-RS and so on.

Also, the control section 301 controls the scheduling of uplink data signals transmitted in the PUSCH, uplink control signals transmitted in the PUCCH and/or the PUSCH (for example, delivery acknowledgement information), random access preambles transmitted in the PRACH, uplink reference signals and so on.

The control section 301 controls transmission and/or reception in predetermined user terminals 20, on a per TTI basis (or on a per symbol basis), based on a self-contained subframe configuration comprised of a period for transmitting and receiving downlink control information (allocated period), a period for transmitting and receiving data (data period) and a period for transmitting/receiving A/Ns (delivery acknowledgment period). For example, the control section 301 controls the length of each period in TTI units, and performs control so that communication is performed in accordance with each period. Note that, each period may be provided to be adjacent in time (such that, following each period, the next period starts immediately), or a non-transmission period may be further provided between each period (also referred to as a "non-reception period," a "guard period," etc.).

For example, the control section 401 determines the amount of downlink data (the number of DL subframes and/or DL-TBS) corresponding to HARQ-ACKs to receive in a predetermined TTI, based on predetermined information, and determines the data transmitting timings, HARQ-ACK receiving timings, etc. Here, the predetermined TTIs refer to TTIs for receiving HARQ-ACKs (for example, self-contained subframes).

To be more specific, the control section 301 may determine the number or quantity of the above downlink data based on the content of at least one piece of delivery acknowledgment information that is input from the received signal processing section 304 (first embodiment). The control section 401 can exert control so that the number or quantity of the above downlink data increases when the latest delivery acknowledgment information received is an ACK or the amount of downlink data decreases or does not increase when the latest delivery acknowledgment information received is a NACK/DTX.

Further, the control section 301 may autonomously determine the number or quantity of the above downlink data, and transmit specifying information (bit field) for specifying the TTIs to transmit HARQ-ACKs, to the user terminal 20 (second embodiment). The above-mentioned specifying information may be information on the number or quantity of all or a part of (for example, remaining) downlink data corresponding to HARQ-ACKs transmitted in a predetermined TTI, or may be information as to whether or not the TTIs in which the downlink control information is received are predetermined TTIs.

Note that the control section 301 may make autonomous decisions based on information to be fed back to the user terminal 20 (for example, HARQ-ACKs, channel state information, etc.), feedback information from the user terminal 20 (for example, HARQ-ACKs, channel state information, etc.), information reported from another radio base station 10, measurement results in the measurement section 305, and so on.

Further, the control section 301 may perform control so that different radio resource configurations are applied to self-contained subframes for transmitting HARQ-ACKs and DL data-receiving subframes other than these self-contained subframes (variation 1). Further, the control section 301 may perform control so that the same downlink control channel configuration is applied to a self-contained subframe in which an HARQ-ACK is transmitted and the subframe in which DL data is received first (variation 2).

Also, when multiple carriers are configured in the user terminal 20, the control section 301 may exert control so that uplink/downlink transmission/reception is performed in the radio communication method described in each embodiment on each carrier with a certain carrier as a downlink carrier (DL carrier) and another carrier as an uplink carrier (UL carrier).

Further, the control section 301 may exert control so that various information such as information on the configuration of self-contained subframes is generated and reported to the user terminal 20 using higher layer signaling (for example, RRC signaling, broadcast information (MIB, SIB), downlink control information (DCI etc.), a combination thereof, etc.

The transmission signal generating section 302 generates downlink signals (downlink control signals, downlink data signals, downlink reference signals and so on) based on commands from the control section 301, and outputs these signals to the mapping section 303. The transmission signal generating section 302 can be constituted by a signal generator, a signal generating circuit or a signal generating device that can be described based on common understanding of the technical field to which the present invention pertains.

For example, the transmission signal generating section 302 generates DL assignments, which report downlink signal allocation information, and UL grants, which report uplink signal allocation information, based on commands from the control section 301. Also, the downlink data signals are subjected to the coding process, the modulation process and so on, by using coding rates and modulation schemes that are determined based on, for example, channel state information (CSI: Channel State Information) reported from each user terminal.

The mapping section 303 maps the downlink signals generated in the transmission signal generating section 302 to predetermined radio resources based on commands from the control section 301, and outputs these to the transmitting/receiving sections 103. The mapping section 303 can be constituted by a mapper, a mapping circuit or a mapping device that can be described based on common understanding of the technical field to which the present invention pertains.

The received signal processing section 304 performs receiving processes (for example, demapping, demodulation, decoding and so on) of received signals that are input from the transmitting/receiving sections 103. Here, the received signals include, for example, uplink signals transmitted from the user terminals 20 (uplink control signals, uplink data signals, uplink reference signals and so on). For the received signal processing section 304, a signal processor, a signal processing circuit or a signal processing device that can be described based on common understanding of the technical field to which the present invention pertains can be used.

The received signal processing section 304 outputs the decoded information acquired through the receiving processes to the control section 301. For example, when a PUCCH to contain an HARQ-ACK is received, the received signal processing section 304 outputs this HARQ-ACK to the control section 301. Also, the received signal processing section 304 outputs the received signals, the signals after the receiving processes and so on, to the measurement section 305.

The measurement section 305 conducts measurements with respect to the received signals. The measurement section 305 can be constituted by a measurer, a measurement circuit or a measurement device that can be described based on common understanding of the technical field to which the present invention pertains.

The measurement section 305 may measure the received power (for example, the RSRP (Reference Signal Received Power)), the received quality (for example, RSRQ (Reference Signal Received Quality)), channel states and so on of the received signals. The measurement results may be output to the control section 301.

### (User terminal)

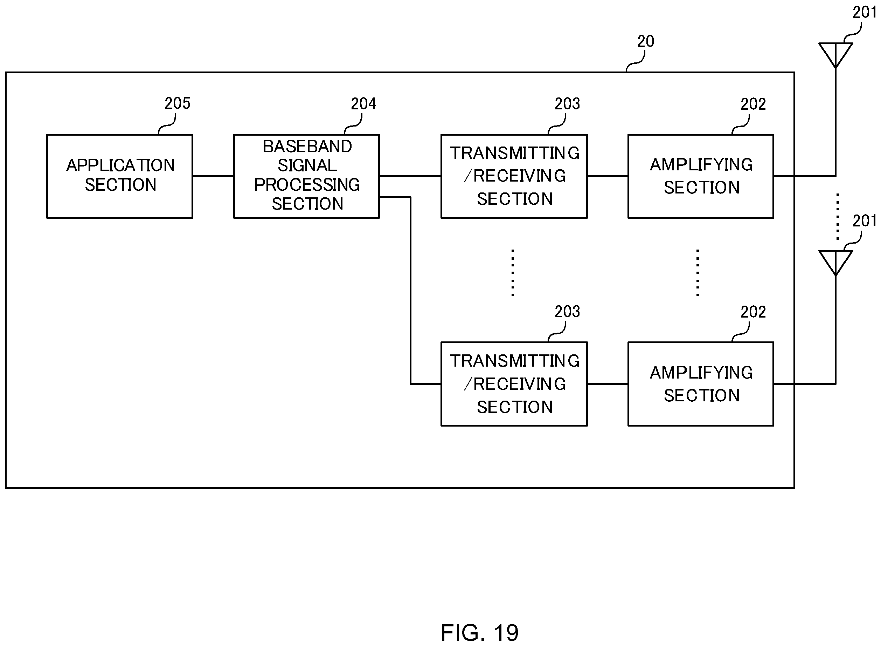

FIG. 19 is a diagram to show an example of an overall structure of a user terminal according to one embodiment of the present invention. A user terminal 20 has a plurality of transmitting/receiving antennas 201, amplifying sections 202, transmitting/receiving sections 203, a baseband signal processing section 204 and an application section 205. Note that at least one transmitting/receiving antenna 201, amplifying section 202 and transmitting/receiving section 203 has only to be provided.

Radio frequency signals that are received in the transmitting/receiving antennas 201 are amplified in the amplifying sections 202. The transmitting/receiving sections 203 receive the downlink signals amplified in the amplifying sections 202. The received signals are subjected to frequency conversion and converted into the baseband signal in the transmitting/receiving sections 203, and output to the baseband signal processing section 204. The transmitting/receiving sections 203 can be constituted by transmitters/receivers, transmitting/receiving circuits or transmitting/receiving devices that can be described based on common understanding of the technical field to which the present invention pertains. Note that a transmitting/receiving section 203 may be structured as a transmitting/receiving section in one entity, or may be constituted by a transmitting section and a receiving section.

In the baseband signal processing section 204, the baseband signal that is input is subjected to an FFT process, error correction decoding, a retransmission control receiving process, and so on. Downlink user data is forwarded to the application section 205. The application section 205 performs processes related to higher layers above the physical layer and the MAC layer, and so on. Furthermore, in the downlink data, broadcast information is also forwarded to the application section 205.

Meanwhile, uplink user data is input from the application section 205 to the baseband signal processing section 204. The baseband signal processing section 204 performs a retransmission control transmission process (for example, an HARQ transmission process), channel coding, pre-coding, a discrete Fourier transform (DFT) process, an IFFT process and so on, and the result is forwarded to the transmitting/receiving section 203. The baseband signal that is output from the baseband signal processing section 204 is converted into a radio frequency bandwidth in the transmitting/receiving sections 203 and transmitted. The radio frequency signals that are subjected to frequency conversion in the transmitting/receiving sections 203 are amplified in the amplifying sections 202, and transmitted from the transmitting/receiving antennas 201.

In addition, in the data period in self-contained subframes for UL data selected by the control section 401, the transmitting/receiving sections 203 may transmit uplink data by using an uplink shared channel (for example, the PUSCH), UL subframes, etc. The transmitting/receiving sections 203 transmit HARQ-ACKs in response to downlink data transmitted in the downlink shared channel (PDSCH) in the delivery acknowledgment period in DL data self-contained subframes selected by the control section 401.

The transmitting/receiving sections 203 receive downlink data (PDSCH) in the data period in DL data self-contained subframes selected by the control section 401 and in DL subframes. Further, the transmitting/receiving sections 203 may receive HARQ-ACKs in response to uplink data (PUSCH) in the delivery acknowledgment period in UL data self-contained subframes selected by the control section 401. Further, the transmitting/receiving sections 203 may receive, from the radio base station 10, information on the structure of self-contained subframes (for example, the length of each period (the allocation period, the data period, the A/N period, the length of GP, etc.), the amount of radio resources used in each period, etc.).

In the allocation period determined by the control section 401, the transmitting/receiving sections 203 receive DCI related to transmission and/or reception of data from the radio base station 10. For example, the transmitting/receiving sections 203 may receive information (DL grant) that commands reception of the downlink shared channel (PDSCH). Further, the transmitting/receiving sections 203 may receive information (UL grant) that commands transmission of the uplink shared channel (PUSCH). These DCIs may be received in the same TTI or may be received in different TTIs. Also, these DCIs may be received on the same frequency carrier or on different frequency carriers.

Further, the transmitting/receiving section 203 may receive feedback subframe specifying information (specifying information), information on the method of increasing/reducing the measure of feedback, information about the frequency resource and/or code resource where a downlink control channel is allocated, and so on.

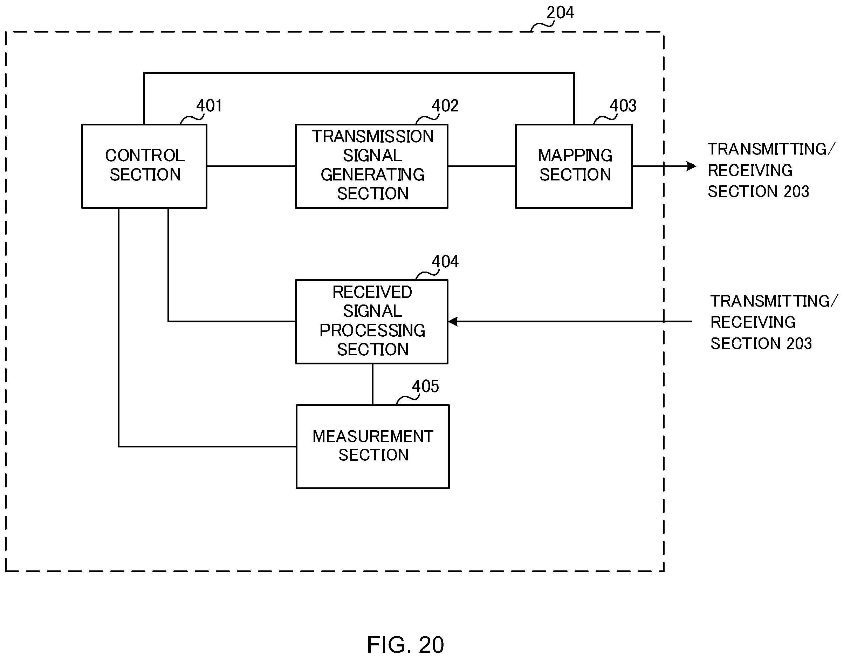

FIG. 20 is a diagram to show an example of a functional structure of a user terminal according to one embodiment of the present invention. Note that, although FIG. 20 primarily shows functional blocks that pertain to characteristic parts of the present embodiment, the user terminal 20 has other functional blocks that are necessary for radio communication as well. As shown in FIG. 20, the baseband signal processing section 204 provided in the user terminal 20 at least has a control section 401, a transmission signal generating section 402, a mapping section 403, a received signal processing section 404 and a measurement section 405.

The control section 401 controls the whole of the user terminal 20. For the control section 401, a controller, a control circuit or a control device that can be described based on common understanding of the technical field to which the present invention pertains can be used.

The control section 401, for example, controls the generation of signals in the transmission signal generating section 402, the allocation of signals by the mapping section 403, and so on. Furthermore, the control section 401 controls the signal receiving processes in the received signal processing section 404, the measurements of signals in the measurement section 405, and so on.

The control section 401 acquires downlink control signals (signals transmitted in the PDCCH/EPDCCH) and downlink data signals (signals transmitted in the PDSCH) transmitted from the radio base station 10, from the received signal processing section 404. The control section 401 controls the generation of uplink control signals (for example, delivery acknowledgement signals and so on) and uplink data signals, based on the downlink control signals, the results of deciding whether or not retransmission control is necessary for the downlink data signals, and so on.

The control section 401 controls transmission and/or reception, on a per TTI basis (or on a per symbol basis), based on a self-contained subframe configuration comprised of a period for transmitting and receiving downlink control information (allocated period), a period for transmitting and receiving data (data period) and a period for transmitting/receiving A/Ns (delivery acknowledgment period). For example, the control section 401 controls the length of each period in TTI units, and performs control so that communication is performed in accordance with each period. Note that, each period may be provided to be adjacent in time (such that, following each period, the next period starts immediately), or a non-transmission period may be further provided between each period (also referred to as a "non-reception period," a "guard period," etc.).

For example, the control section 301 determines the amount of downlink data (the number of DL subframes and/or DL-TBS) corresponding to HARQ-ACKs to transmit in predetermined TTIs, based on predetermined information, and determines the data receiving timings, HARQ-ACK transmitting timings, etc. Here, the predetermined TTIs refer to TTIs for transmitting HARQ-ACKs (for example, self-contained subframes).

To be more specific, the control section 401 may determine the number or quantity of the above downlink data based on the content of at least one piece of delivery acknowledgment information transmitted from the transmitting/receiving sections 203 (first embodiment). The control section 401 can exert control so that the number or quantity of the above downlink data increases when the latest delivery acknowledgment information transmitted is an ACK or the number or quantity of the above downlink data decreases or does not increase when the latest delivery acknowledgment information transmitted is a NACK/DTX.

Further, the control section 401 may autonomously determine the number or quantity of the above downlink data, based on specifying information (bit field) for specifying the TTIs to transmit HARQ-ACKs, input from the received signal processing section 404 (second embodiment). The above-mentioned specifying information may be information on the number or quantity of all or a part of (for example, remaining) downlink data corresponding to HARQ-ACKs transmitted in a predetermined TTI, or may be information as to whether or not the TTIs in which the downlink control information is received are predetermined TTIs.

Further, the control section 401 may exert control judging that the radio resource configuration is different between self-contained subframes for transmitting HARQ-ACKs and DL data-receiving subframes other than these self-contained subframes (variation 1). Also, control may be performed assuming that the same downlink control channel configuration is used between a self-contained subframe for transmitting an HARQ-ACK and a subframe in which DL data is received first (variation 2).

Further, when the user terminal 20 is configured with a plurality of carriers, the control section 401 may exert control so that uplink/downlink transmission and reception are made in each carrier in the radio communication methods of each embodiment described above, by making a certain carrier a downlink carrier (DL carrier) and another carrier an uplink carrier (UL carrier).

When various information such as information on the configuration of self-contained subframes is acquired from the received signal processing section 404, the control section 401 may update the parameters to use for control based on the information.

The transmission signal generating section 402 generates uplink signals (uplink control signals, uplink data signals, uplink reference signals and so on) based on commands from the control section 401, and outputs these signals to the mapping section 403. The transmission signal generating section 402 can be constituted by a signal generator, a signal generating circuit or a signal generating device that can be described based on common understanding of the technical field to which the present invention pertains.

For example, the transmission information generating section 402 generates uplink control signals such as delivery acknowledgement signals (HARQ-ACKs), channel state information (CSI) and so on, based on commands from the control section 401. Also, the transmission signal generating section 402 generates uplink data signals based on commands from the control section 401. For example, when a UL grant is included in a downlink control signal that is reported from the radio base station 10, the control section 401 commands the transmission signal generating section 402 to generate an uplink data signal.

The mapping section 403 maps the uplink signals generated in the transmission signal generating section 402 to radio resources based on commands from the control section 401, and output the result to the transmitting/receiving sections 203. The mapping section 403 can be constituted by a mapper, a mapping circuit or a mapping device that can be described based on common understanding of the technical field to which the present invention pertains.

The received signal processing section 404 performs receiving processes (for example, demapping, demodulation, decoding and so on) of received signals that are input from the transmitting/receiving section 203. Here, the received signals include, for example, downlink signals (downlink control signals, downlink data signals, downlink reference signals and so on) that are transmitted from the radio base station 10. The received signal processing section 404 can be constituted by a signal processor, a signal processing circuit or a signal processing device that can be described based on common understanding of the technical field to which the present invention pertains. Also, the received signal processing section 404 can constitute the receiving section according to the present invention.

The received signal processing section 404 performs blind decoding on the DCI (DCI format) for scheduling transmission and/or reception of data (TB: Transport Block) based on commands from the control section 401. For example, the received signal processing section 404 may be configured to blind-decode different radio resources based on whether or not the subframe is a self-contained subframe.

The received signal processing section 404 output the decoded information that is acquired through the receiving processes to the control section 401. The received signal processing section 404 outputs, for example, broadcast information, system information, RRC signaling, DCI and so on, to the control section 401. The received signal processing section 404 may output the decoding result of the data to the control section 401. Also, the received signal processing section 404 outputs the received signals, the signals after the receiving processes and so on to the measurement section 405.

The measurement section 405 conducts measurements with respect to the received signals. The measurement section 405 can be constituted by a measurer, a measurement circuit or a measurement device that can be described based on common understanding of the technical field to which the present invention pertains.

The measurement section 405 may measure, for example, the received power (for example, RSRP), the received quality (for example, RSRQ), the channel states and so on of the received signals. The measurement results may be output to the control section 401.

### (Hardware structure)

Note that the block diagrams that have been used to describe the above embodiments show blocks in functional units. These functional blocks (components) may be implemented in arbitrary combinations of hardware and/or software. Also, the means for implementing each functional block is not particularly limited. That is, each functional block may be implemented with one physically-integrated device, or may be implemented by connecting two physically-separate devices via radio or wire and using these multiple devices.

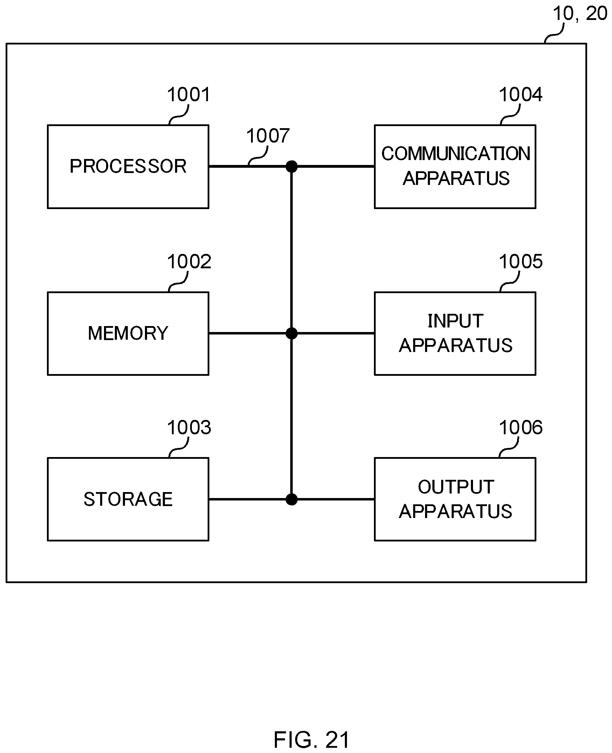

That is, a radio base station, a user terminal and so on according to an embodiment of the present invention may function as a computer that executes the processes of the radio communication method of the present invention. FIG. 21 is a diagram to show an example hardware structure of a radio base station and a user terminal according to an embodiment of the present invention. Physically, a radio base station 10 and a user terminal 20, which have been described above, may be formed as a computer apparatus that includes a central processing apparatus (processor) 1001, a primary storage apparatus (memory) 1002, a secondary storage apparatus 1003, a communication apparatus 1004, an input apparatus 1005, an output apparatus 1006 and a bus 1007.

Note that, in the following description, the word "apparatus" may be replaced by "circuit," "device," "unit" and so on. Note that the hardware structure of the radio base station 10 and the user terminal 20 may be designed to include one or more of each apparatus shown in the drawings, or may be designed not to include part of the apparatuses.

Each function of the radio base station 10 and user terminal 20 is implemented by reading predetermined software (programs) on hardware such as the central processing apparatus 1001, the primary storage apparatus 1002 and so on, and controlling the calculations in the central processing apparatus 1001, the communication in the communication apparatus 1004, and the reading and/or writing of data in the primary storage apparatus 1002 and the secondary storage apparatus 1003.

The central processing apparatus 1001 may control the whole computer by, for example, running an operating system. The processor 1001 may be configured with a central processing unit (CPU) including an interface with a peripheral device, a control device, a computing device, a register, and the like. For example, the above-described baseband signal process section 104 (204), call processing section 105 and so on may be implemented by the central processing apparatus 1001.

Further, the processor 1001 reads a program (program code), a software module or data from the storage 1003 and/or the communication device 1004 to the memory 1002, and executes various processes according to these. As for the programs, programs to allow the computer to execute at least part of the operations of the above-described embodiments may be used. For example, the control section 401 of the user terminals 20 may be stored in memory 1002 and implemented by a control program that operates on processor 1001, and other functional blocks may be implemented likewise.

The primary storage apparatus (memory) 1002 is a computer-readable recording medium, and may be constituted by, for example, at least one of a ROM (Read Only Memory), an EPROM (Erasable Programmable ROM), a RAM (Random Access Memory) and so on. The memory 1002 may be referred to as a "register," a "cache," a "main memory" (primary storage apparatus), or the like. The memory 1002 can store executable programs (program codes), software modules, and the like for implementing the radio communication method according to one embodiment of the present invention.

The storage 1003 is a computer readable recording medium, and is configured with at least one of an optical disk such as a CD-ROM (Compact Disc ROM), a hard disk drive, a flexible disk, a magneto-optical disk, a flash memory. The storage 1003 may be referred to as an "auxiliary storage device."

The communication apparatus 1004 is hardware (transmitting/receiving device) for allowing inter-computer communication by using wired and/or wireless networks, and may be referred to as, for example, a "network device," a "network controller," a "network card," a "communication module" and so on. For example, the above-described transmitting/receiving antennas 101 (201), amplifying sections 102 (202), transmitting/receiving sections 103 (203), communication path interface 106 and so on may be implemented by the communication apparatus 1004.

The input apparatus 1005 is an input device for receiving input from the outside (for example, a keyboard, a mouse, etc.). The output apparatus 1006 is an output device for allowing sending output to the outside (for example, a display, a speaker, etc.). Note that the input apparatus 1005 and the output apparatus 1006 may be provided in an integrated structure (for example, a touch panel).

Further, the respective devices such as the processor 1001 and the memory 1002 are connected by a bus 1007 for communicating information. The bus 1007 may be formed with a single bus, or may be formed with buses that vary between the apparatuses.

For example, the radio base station 10 and the user terminal 20 may be structured to include hardware such as an ASIC (Application-Specific Integrated Circuit), a PLD (Programmable Logic Device), an FPGA (Field Programmable Gate Array) and so on, and part or all of the functional blocks may be implemented by the hardware. For example, the processor 1001 may be implemented with at least one of these hardware.

Note that the terminology used in this description and the terminology that is needed to understand this description may be replaced by other terms that convey the same or similar meanings. For example, "channels" and/or "symbols" may be replaced by "signals" (or "signaling"). Also, "signals" may be "messages." Furthermore, "component carriers" (CCs) may be referred to as "cells," "frequency carriers," "carrier frequencies" and so on.

Further, the radio frame may be comprised of one or more periods (frames) in the time domain. Each of the one or more periods (frames) constituting the radio frame may be referred to as a subframe. Further, the subframe may comprise one or more slots in the time domain. Further, the slot may be comprised of one or more symbols (OFDM symbol, SC-FDMA symbol, etc.) in the time domain.

Both radio frames, subframes, slots and symbols represent time units for signal communication. Different designations corresponding to the respective radio frames, subframes, slots and symbols may be used. For example, one subframe may be referred to as a "transmission time interval" (TTI), or a plurality of consecutive subframes may be referred to as a "TTI," and one slot may be referred to as a "TTI." That is, a subframe and a TTI may be a subframe (one ms) in existing LTE, may be a shorter period than one ms (for example, 1 to 13 symbols), or may be a longer period of time than one ms.

Here, a TTI refers to the minimum time unit of scheduling in wireless communication, for example. For example, in the LTE system, the radio base station performs scheduling to allocate radio resources (such as frequency bandwidth and transmission power that can be used in each user terminal) in units of TTIs to each user terminal. The definition of a TTI is not limited to this.

A TTI having a time duration of one ms may be referred to as a "normal TTI" (TTI in LTE Rel. 8 to 12), a "long TTI," a "normal subframe," a "long subframe," etc. A TTI shorter than a normal TTI may be referred to as a "shortened TTI," a "short TTI," a "shortened subframe," a "short subframe," or the like.

A resource block (RB) is a resource allocation unit in the time domain and the frequency domain, and may include one or a plurality of consecutive subcarriers in the frequency domain. Also, an RB may include one or more symbols in the time domain and may be one slot, one subframe or one TTI in length. One TTI and one subframe each may be comprised of one or more resource blocks. Note that an RB may be referred to as a "physical resource block" (PRB: Physical RB), a "PRB pair," an "RB pair," or the like.

Further, a resource block may be comprised of one or more resource elements (REs). For example, one RE may be a radio resource field of one subcarrier and one symbol.

Note that the structures of radio frames, subframes, slots, symbols and the like described above are merely examples. For example, configurations such as the number of subframes included in a radio frame, the number of slots included in a subframe, the number of symbols and RBs included in a slot, the number of subcarriers included in an RB, the number of symbols in a TTI, the symbol duration and the cyclic prefix (CP) length can be variously changed.

Also, the information and parameters described in this description may be represented in absolute values or in relative values with respect to a predetermined value, or may be represented in other information formats. For example, radio resources may be specified by predetermined indices.

The information, signals and/or others described in this description may be represented by using a variety of different technologies. For example, data, instructions, commands, information, signals, bits, symbols and chips, all of which may be referenced throughout the description, may be represented by voltages, currents, electromagnetic waves, magnetic fields or particles, optical fields or photons, or any combination of these.

Also, software and commands may be transmitted and received via communication media. For example, when software is transmitted from a website, a server or other remote sources by using wired technologies (coaxial cables, optical fiber cables, twisted-pair cables, digital subscriber lines (DSL) and so on) and/or wireless technologies (infrared radiation and microwaves), these wired technologies and/or wireless technologies are also included in the definition of communication media.

Further, the radio base station in this specification may be read by a user terminal. For example, each aspect/embodiment of the present invention may be applied to a configuration in which communication between a radio base station and a user terminal is replaced with communication of a plurality of user terminals (D2D: Device-to-Device). In this case, the user terminal 20 may have the functions of the radio base station 10 described above. In addition, wording such as "uplink" and "downlink" may be interpreted as "side." For example, an uplink channel may be interpreted as a side channel.

Likewise, a user terminal in this specification may be interpreted as a radio base station. In this case, the radio base station 10 may have the functions of the user terminal 20 described above.

The examples/embodiments illustrated in this description may be used individually or in combinations, and may be switched depending on the implementation. Also, a report of predetermined information (for example, a report to the effect that "X holds") does not necessarily have to be sent explicitly, and can be sent implicitly (by, for example, not reporting this piece of information).

Reporting of information is by no means limited to the example s/embodiments described in this description, and other methods may be used as well. For example, reporting of information may be implemented by using physical layer signaling (for example, DCI (Downlink Control Information) and UCI (Uplink Control Information)), higher layer signaling (for example, RRC (Radio Resource Control) signaling, broadcast information (the MIB (Master Information Blocks) and SIBs (System Information Blocks) and so on) and MAC (Medium Access Control) signaling, other signals or combinations of these. Also, RRC signaling may be referred to as "RRC messages," and can be, for example, an RRC connection setup message, RRC connection reconfiguration message, and so on. Also, the MAC signaling may be reported, for example, by a MAC control element (MAC CE (Control Element)).

The examples/embodiments illustrated in this description may be applied to LTE (Long Term Evolution), LTE-A (LTE-Advanced), LTE-B (LTE-Beyond), SUPER 3G, IMT-Advanced, 4G (4th generation mobile communication system), 5G (5th generation mobile communication system), FRA (Future Radio Access), New-RAT (Radio Access Technology), CDMA 2000, UMB (Ultra Mobile Broadband), IEEE 802.11 (Wi-Fi (registered trademark)), IEEE 802.16 (WiMAX (registered trademark)), IEEE 802.20, UWB (Ultra-WideBand), Bluetooth (registered trademark), and other adequate systems, and/or next-generation systems that are enhanced based on these.

The order of processes, sequences, flowcharts and so on that have been used to describe the examples/embodiments herein may be re-ordered as long as inconsistencies do not arise. For example, although various methods have been illustrated in this description with various components of steps in exemplary orders, the specific orders that illustrated herein are by no means limiting.

Now, although the present invention has been described in detail above, it should be obvious to a person skilled in the art that the present invention is by no means limited to the embodiments described herein. For example, the above-described embodiments may be used individually or in combinations. The present invention can be implemented with various corrections and in various modifications, without departing from the spirit and scope of the present invention defined by the recitations of claims. Consequently, the description herein is provided only for the purpose of explaining example s, and should by no means be construed to limit the present invention in any way.

The disclosure of Japanese Patent Application No. 2015-255031, filed on December 25, 2015, including the specification, drawings and abstract, is incorporated herein by reference in its entirety.

## Claims

1. A user terminal comprising:
a receiving section that receives downlink control information for scheduling receipt of downlink data;
a control section that controls an allocation period for receiving the downlink control information, a data period for receiving at least part of the downlink data based on the received downlink control information, and a delivery acknowledgment period for transmitting delivery acknowledgment information in response to the receipt of the downlink data, in units of transmission time intervals (TTIs); and
a transmitting section that transmits the delivery acknowledgment information in a predetermined TTI,
wherein the control section judges the number and/or quantity of the downlink data corresponding to the delivery acknowledgment information transmitted in the predetermined TTI based on predetermined information.

2. The user terminal according to claim 1, wherein the control section judges the number and/or quantity of the downlink data based on content of at least one piece of the delivery acknowledgment information transmitted.

3. The user terminal according to claim 2, wherein the control section increases the number and/or quantity of the downlink data when the delivery acknowledgment information transmitted comprises an ACK (Acknowledgment).

4. The user terminal according to claim 2 or claim 3, wherein the control section reduces or does not increase the number and/or quantity of the downlink data when the latest delivery acknowledgment information transmitted comprises a NACK (Negative Acknowledgment) or a DTX (Discontinuous Transmission).

5. The user terminal according to claim 1, wherein the control section judges the number and/or quantity of the downlink data based on specifying information for specifying the predetermined TTI, included in the downlink control information.

6. The user terminal according to claim 5, wherein the specifying information is information on the number or quantity of remaining downlink data corresponding to the delivery acknowledgment information.

7. The user terminal according to claim 5, wherein the specifying information is information on whether or not a TTI where the downlink control information is received is the predetermined TTI.

8. The user terminal according to one of claims 1 to claim7, wherein, in a TTI in which the downlink data is first received and in a TTI in which the downlink data is last received, the receiving section receives the downlink control information in a radio resource that is different than other TTIs in which the downlink data is received.

9. A radio base station comprising:
a transmission section that transmits downlink control information for scheduling receipt of downlink data;
a control section that controls an allocation period for transmitting the downlink control information, a data period for transmitting at least part of the downlink data corresponding to the downlink control information, and a delivery acknowledgment period for receiving delivery acknowledgment information transmitted in response to the downlink data, in units of transmission time intervals (TTIs); and
a receiving section that receives the delivery acknowledgment information in a predetermined TTI,
wherein the control section judges the number and/or quantity of the downlink data corresponding to the delivery acknowledgment information received in the predetermined TTI based on predetermined information.

10. A radio communication method comprising:
receiving downlink control information for scheduling receipt of downlink data;
controlling an allocation period for receiving the downlink control information, a data period for receiving at least part of the downlink data based on the received downlink control information, and a delivery acknowledgment period for transmitting delivery acknowledgment information in response to the receipt of the downlink data, in units of transmission time intervals (TTIs); and
transmitting the delivery acknowledgment information in a predetermined TTI,
wherein the number and/or quantity of the downlink data corresponding to the delivery acknowledgment information transmitted in the predetermined TTI is judged based on predetermined information.
